# EUROPÄISCHE PATENTSCHRIFT

(11) **EP 4 114 242 B1**
(45) Veröffentlichungstag und Bekanntmachung des Hinweises auf die Patenterteilung: **30.04.2025**
(21) Anmeldenummer: 21709672.6
(22) Anmeldetag: 02.03.2021
(51) Int. Cl.: A47L 15/24

(54) **HANDHABUNGSMODUL ZUR BELADUNG EINER TRANSPORTVORRICHTUNG EINER TRANSPORTSPÜLMASCHINE**
HANDLING MODULE FOR LOADING A TRANSPORT DEVICE OF A CONVEYOR DISHWASHER
MODULE DE MANIPULATION POUR LE CHARGEMENT D'UN DISPOSITIF DE TRANSPORT D'UN LAVE-VAISSELLE À CONVOYEUR

(30) Priorität: 02.03.2020 DE 102020202638
(43) Veröffentlichungstag der Anmeldung: 11.01.2023
(73) Patentinhaber: MEIKO Maschinenbau GmbH & Co. KG, 77652 Offenburg (DE)
(72) Erfinder: GAUS, Bruno, 77654 Offenburg (DE); FÖHRENBACH, Harald, 77749 Hohberg (DE); RINGWALD, Bernd, 77799 Ortenberg (DE); LEHMANN, Denis, 77799 Ortenberg (DE); NÄGER, Thomas, 77652 Offenburg (DE); ROHDE, Markus, 77866 Rheinau (DE); TRÄNKLE, Marcel, 77966 Kappel- Grafenhausen (DE)
(74) Vertreter: Altmann Stößel Dick Patentanwälte PartG mbB
(86) Internationale Anmeldenummer: PCT/EP2021/055209
(87) Internationale Veröffentlichungsnummer: WO 2021/175866

(56) Entgegenhaltungen:
- KR-A- 20110 010 991
- KR-B1- 101 327 580
- KR-B1- 102 030 524

## Beschreibung

### Technisches Gebiet

Die Erfindung betrifft ein Handhabungsmodul zur Beladung einer Transportvorrichtung einer Transportspülmaschine sowie ein Reinigungssystem zur Reinigung von Reinigungsgut, umfassend das Handhabungsmodul sowie mindestens eine Transportspülmaschine. Weiterhin betrifft die Erfindung ein Verfahren zur Reinigung von Reinigungsgut unter Verwendung des Reinigungssystems. Systeme und Verfahren der genannten Art können beispielsweise im Bereich der Geschirrspültechnik eingesetzt werden, insbesondere im Bereich der gewerblichen Geschirrspültechnik. So kann die Erfindung insbesondere in Großküchen eingesetzt werden, in denen Reinigungsgut, beispielsweise Tabletts, Geschirr und Besteck, in größeren Mengen gereinigt werden müssen. Insbesondere kann die Erfindung bei Transportspülmaschinen wie beispielsweise Bandtransportspülmaschinen eingesetzt werden. Auch andere Einsatzgebiete sind jedoch grundsätzlich denkbar.

### Technischer Hintergrund

Aus dem Stand der Technik sind eine Vielzahl von Reinigungsvorrichtungen, auch als Reinigungsgeräte bezeichnet, bekannt, welche Reinigungsgut reinigen und/oder desinfizieren können. Ohne Beschränkungen weiterer möglicher Ausgestaltungen wird die Erfindung im Folgenden unter Bezugnahme auf Reinigungsgut beschrieben, welches zur Darreichung, Zubereitung oder Aufbewahrung von Speisen dient. Die Ausgestaltung dieser Reinigungsvorrichtungen hängt insgesamt stark von den verschiedenen Randbedingungen, wie beispielsweise der Art des zu reinigenden Reinigungsguts, den Verschmutzungen, dem Durchsatz oder ähnlichen Bedingungen ab. Exemplarisch kann auf Reinigungsvorrichtungen verwiesen werden, welche beispielsweise in DE 10 2004 056 052 A1 oder in DE 10 2007 025 263 A1 beschrieben sind.

Das Reinigungsgut kann beispielsweise ein Tablett umfassen, welches beispielsweise mit Geschirr, Besteck, Speiseresten und einer Serviette beladen ist. Das Geschirr kann dabei beispielsweise einen Teller, eine Suppenschale, eine Dessertschale, eine Salatschale, eine Tasse und ein Trinkglas umfassen oder lediglich eine Auswahl aus diesen Möglichkeiten. Zusätzlich können beispielsweise, insbesondere in Krankenhäusern oder Pflegeeinrichtungen, Warmhaltegefäße und eine zugehörige Abdeckung für den Teller vorhanden sein. Diese Warmhaltegefäße werden auch als Cloche bezeichnet. Dieser Umfang wird zusammen mit dem Tablett auch als Gedecksatz bezeichnet. Das Auftreten und die Verteilung dieser Teile können sehr gleichmäßig sein, beispielsweise in einer Gefängniskantine. Es können aber auch sehr variable Zusammensetzungen des Gedecksatzes auftreten, wenn beispielsweise Betriebsrestaurants oder Universitätsmensen ein breites Speisenangebot anbieten. Auch eine Variabilität in der zeitlichen Dimension kann auftreten, beispielsweise im Unterschied zwischen Frühstück, Mittagessen und Abendessen.

Das Besteck kann üblicherweise ein Messer, eine Gabel, einen Suppenlöffel und einen kleinen Löffel umfassen oder lediglich eine Auswahl der genannten Besteckteile. Je nach länderspezifischen Gegebenheiten können Variationen im Gedecksatz und auch bei den Speiseresten vorhanden sein oder zu erwarten sein. Auch die Ausgestaltung der Speisereste kann sehr unterschiedlich sein, beispielsweise von geringen Resten an Soße auf dem Teller über Reste der eigentlichen Speisen in allen Gefäßen bis hin zu nahezu vollständig gefüllten Gefäßen. Hinzu kommen beispielsweise noch Speisereste, die üblicherweise nicht verzehrt werden, wie insbesondere Knochen, Fischgräten, Schalen von Meeresfrüchten, Obstkerne, Holzspieße oder ähnliche Gegenstände.

In üblichen Großküchen erfolgt die Verarbeitung des Reinigungsguts in verschiedenen Etappen. Im Folgenden wird exemplarisch die Verwendung einer Transport Spülmaschine beschrieben. So kann zunächst ein Transport der beladenen Tabletts aus dem Speiseraum in die Spülmaschine erfolgen, beispielsweise mittels Wagen oder auch mittels Transportsystemen wie beispielsweise Förderbändern. Anschließend können die Tabletts vereinzelt werden, beispielsweise von Hand oder auch maschinell. Anschließend können Störteile entfernt werden, und Trinkgläser abgeräumt werden. Trinkgläser können beispielsweise entleert werden und in spezielle Gläserkörbe oder direkt auf ein Transportband der Spülmaschine eingesetzt werden. Weiterhin können die Geschirrteile entsprechend orientiert werden, damit diese vom Transportband der Spülmaschine optimal aufgenommen und korrekt gereinigt werden können. Vor der Eingabe in die Spülmaschine müssen jedoch in der Regel Speisereste von dem Geschirr entfernt und so entsorgt werden, dass die Arbeitsumgebung nicht verschmutzt wird. Besteckteile werden in der Regel ausgerichtet und in Besteckkörbe oder Besteckköcher oder auch auf das Transportband der Spülmaschine positioniert. Weiterhin müssen in der Regel Speisereste und Servietten von dem Tablett abgeräumt und entsorgt werden, derart, dass die Arbeitsumgebung nicht verschmutzt wird. Anschließend werden in der Regel die Tabletts in die Spülmaschine eingebracht, wobei diese individuell zum Transportband der Spülmaschine ausgerichtet werden, damit diese von der Spülmaschine optimal aufgenommen und korrekt gereinigt werden können.

Bei der Reinigung des Gedecksatzes bestehen mehrere Möglichkeiten. So können alle Teile in einer einzigen Spülmaschine verarbeitet werden. In diesen Fällen kann beispielsweise die Transportvorrichtung der Spülmaschine in mehrere Spuren eingeteilt sein, die jeweils individuell für eine Art von Reinigungsgut ausgelegt sind. Beispielsweise können eine Spur für Gläser, eine Spur für Tabletts und eine oder mehrere weitere Spuren für verschiedene Arten von Geschirr vorgesehen sein. Die Anordnung und Ausgestaltung der Spuren kann an die betrieblichen Anforderungen abgestimmt sein. Derartige Spülmaschinen mit mehreren Spuren werden häufig auch als Mehrspur-Geschirrspülmaschinen bezeichnet. Alternativ zur Verwendung einer einzelnen Spülmaschine können auch getrennte Spülmaschinen verwendet werden. Beispielsweise kann eine Spülmaschine für Gläser vorgesehen sein, welche beispielsweise in Körben gesammelt werden, und/oder eine separate Tablettspülmaschine für Tabletts. Die Tablettspülmaschine kann beispielsweise Rücken an Rücken zur Geschirrspülmaschine angeordnet ein.

Aus den oben beschriebenen Prozessschritten können einzelne oder mehrere Prozessschritte, alternativ zu einer manuellen Durchführung, automatisch durchgeführt werden. So beschreibt beispielsweise DE 1 956 050 A eine Vorabräumeinrichtung für die Beschickung von Geschirrspülmaschinen mit zu reinigenden Speiseplatten und Speisetabletts aus Großküchenbetrieben. US 2019/0127152 A1 beschreibt eine Transport- und Beladungsvorrichtung. Weiterhin sind auch vollautomatische Anlagen bekannt, welche die oben genannten Schritte und/oder Teile der oben genannten Schritte durchführen können. Beispielsweise ist diesbezüglich auf DE 1 956 049 A, auf DE 2 443 651 A1 oder auch auf DE 3 413 480 A1 zu verweisen. Zudem sind auch Vorrichtungen mit Robotern bekannt. Hierzu kann auf US 2019/0167065 A1, US 2019/0167068 A1 oder auch auf WO 2018/031489 A1 verwiesen werden. Beispielsweise kann magnetisches Besteck oder auch magnetisches Geschirr eingesetzt werden, welches magnetisch von dem übrigen Geschirr abgetrennt wird.

Aus US 2019 / 0 3155 72 A1 ist ein Gerät zum Umdrehen von Tabletts und Geschirr bekannt, mit dem Tabletts und Geschirr einschließlich Geschirr und Schalen umgedreht und sortiert werden können, ohne das Geschirr durch Kollisionen zu beschädigen. Die Kippvorrichtung reduziert auch den Arbeitsaufwand für das Geschirrspülen, indem die Tabletts und das Geschirr automatisch umgedreht werden. Ferner offenbart ist ein Geschirrspülsystem, das eine erste Fördertransporteinheit, die Tablett- und Geschirrkippvorrichtung, eine Kippvorrichtungs-Antriebseinheit, ein Tabletttransportförderband, ein Geschirrtransportförderband und einen Überwachungs- oder Erfassungssensor umfasst.

Die DE 22 14 196 A offenbart ein Verfahren zum Behandeln von schmutzigen Geschirrteilen vor dem Spülvorgang und eine Vorrichtung zur Ausübung des Verfahrens. Das Verfahren zum Behandeln von schmutzigen Geschirrteilen vor dem Spülvorgang ist dadurch gekennzeichnet, dass die Geschirrteile auf Tabletts gefördert werden, die mit mindestens einer Öffnung unter der Stelle vorgesehen sind, die für zumindest bestimmte Teile vorgesehen sind, und dass dann die entsprechenden Geschirrteile abgenommen werden, indem bewegliche Organe von der Unterseite jedes Tabletts her durch die Öffnungen derart geführt werden, dass die genannten Geschirrteile angehoben und abgenommen werden, um sie über eine Führung oder einen sie mitnehmenden Förderer zu einer Waschanlage zu leiten.

In KR 101 327 580 B1 ist ein Automatisierungssystem für Geschirrspüler beschrieben, bei dem: Speisetabletts und Behälter (Suppenschüssel, Reisschüssel, Beilagenteller, Deckel usw. ) durch Zahnräder eines im Hauptkörper installierten Führungsträgers für Speisetabletts getrennt werden, Behälter durch ein Fallloch des Führungsträgers für Speisetabletts zum Falltransfer auf die darunter installierten ersten und zweiten Transferförderer geführt werden, das Präzisionswaschen der Ober- und Unterteile von Behältern automatisch durch die Installation eines Waschteils im Mittelteil ausgeführt wird, verunreinigtes Wasser durch die weitere Installation eines Filterzirkulators in einem verunreinigten Wasserbad wiederverwendet wird, das verunreinigtes Wasser vom Waschen der Behälter durch das Waschteil speichert, und aus den Behältern entfernte Speisereste automatisch nach außen zum schnellen und automatischen Präzisionswaschen entladen werden.

Die KR 102 030 524 B1 beschreibt eine Vorrichtung zum Wenden von Geschirr und Lebensmitteltablett und ein Geschirrspülsystem, das diese verwendet, wobei das Geschirr nicht beschädigt wird, obwohl es herunterfällt, und eine stoßdämpfende Vorrichtung vorgesehen ist, um den Stoß zu lindern. Eine Vielzahl von Geschirrteilen wird gleichzeitig von einem Speisetablett getrennt, und obwohl die Geschirrteile miteinander in Kontakt sind, ist der Stoß gering, damit das Geschirr nicht beschädigt wird. Außerdem wird ein Wendevorgang automatisiert, um die Arbeitskraft zu reduzieren. Das Geschirrspülsystem umfasst eine erste Förderband-Transfervorrichtung, die Geschirr- und Speisetablett-Wendevorrichtung, eine Wendeantriebsvorrichtung, ein Speisetablett-Transferförderband, ein Geschirr-Transferförderband, einen Monitor oder einen Objekterkennungssensor.

Die KR 2011 0010991 A beschreibt eine Vorrichtung zum Sammeln und Zuführen von Geschirrtellern, umfassend eine Einheit zum Wenden von Geschirrtellern, eine Einheit zur Aufnahme von Geschirrtellern und eine Einheit zum Zuführen von Geschirrtellern. Die Geschirrteller-Wendeeinheit wendet die Geschirrteller mit gleichmäßiger Geschwindigkeit. Die Geschirrteller-Aufnahmeeinheit ist vor der Geschirrteller-Wendeeinheit angeordnet und nimmt gebrauchte Geschirrteller auf. Die Geschirrteller-Zuführeinheit ist an der Rückseite der Geschirrteller-Wendeeinheit angeordnet. Die Geschirrteller-Zuführeinheit bewegt die umgedrehten Geschirrteller horizontal und führt die Geschirrteller in gleichmäßigen Abständen einer Geschirrteller-Waschanlage zu.

Es ist die Meinung der Prüfungsabteilung, dass die US 2019 / 0 3155 72 A1 und die KR 2011 0010991 A ein Handhabungsmodul nach dem Oberbegriff des Anspruchs 1 offenbaren.

Trotz der mit den beschriebenen Vorrichtungen erzielten Vorteile bestehen nach wie vor zahlreiche technische und organisatorische Herausforderungen. Insbesondere die Bedarfsplanung für Personal und die Anpassung von Maschinen, Automatisierung und Bedienpersonal an die tatsächliche Situation stellt nach wie vor eine technische, organisatorische und wirtschaftliche Problemstellung dar. Insbesondere müssen einerseits eine Überdimensionierung oder Unterdimensionierung der Vorrichtungen vermieden werden, andererseits muss der Personalbedarf jedoch korrekt und für jegliche Situationen ausreichend geplant werden.

So sind bei herkömmlichen Vorrichtungen zur Bearbeitung der einzelnen Prozessschritte in vielen Fällen zahlreiche manuelle Eingriffe erforderlich. Dies kann dazu führen, dass die Leistungsfähigkeit des menschlichen Bedienpersonals die Grenzen für die Verarbeitungskapazität der gesamten Spülanlage bestimmt. Je nach Menge an Spülgut pro Zeiteinheit müssen dann in der Regel eine oder mehrere Bedienpersonen vor der Spülmaschine eingesetzt werden. Dieser Personaleinsatz erfordert Platz und erzeugt einen Kostenaufwand. Weiterhin kann Personalmangel hier eine wichtige Rolle spielen. Zudem sind die Arbeitsbedingungen für das Bedienpersonal vor Spülmaschinen in vielen Fällen belastend, da erhöhte Temperaturen und zumeist auch eine erhöhte Luftfeuchtigkeit auftreten können. Auch Lärmbelästigung, Gerüche, eine Monotonie sowie Zugluft können zur Belastung beitragen. Andererseits geben in der Regel die Spülmaschine sowie die angekoppelten

Transportsysteme einen Takt vor, welcher vom Bedienpersonal eingehalten werden muss, um einen störungsfreien Prozessablauf zu gewährleisten. Ansonsten kann der Reinigungsprozess zum Stillstand kommen, was beispielsweise dazu führen kann, dass keine weiteren Tabletts aufgegeben werden können.

Teilautomatische Lösungen können die laufenden Kosten verringern, da einzelne Prozessschritte durch automatische Vorrichtungen abgewickelt werden können und da so Bedienpersonal eingespart werden kann. Auch vollautomatische Lösungen können Kosten verringern. Die bekannten teilautomatischen oder auch vollautomatischen Anlagen sind jedoch in der Praxis in vielen Fällen äußerst komplex aufgrund der Vielzahl der Aufgaben, welche durch diese Anlagen abgewickelt werden müssen. Andererseits sind diese Anlagen jedoch in der Regel unflexibel, da diese in vielen Fällen speziell auf den vorhandenen Gedecksatz abgestimmt sein müssen. Wenn sich Veränderungen im Gedecksatz ergeben, so muss in der Regel die automatische oder teilautomatisierte Anlage umgerüstet oder nachgerüstet werden. Solche Veränderungen sind bei bestehenden Anlagen häufig nur in geringem Umfang technisch und wirtschaftlich möglich. Es besteht also bei der Planung und Durchführung allgemein in der Regel lediglich die Wahl zwischen der Verwendung von Bedienpersonal, welches einerseits flexibel eingesetzt werden könnte und welches jedoch hohe Kosten verursacht und hohe Anforderungen hinsichtlich Platzbedarf und Ergonomie stellt, und der Verwendung von teilautomatisierten oder automatisierten Lösungen, welche jedoch unflexibel sind.

### Aufgabe der Erfindung

Es wäre daher wünschenswert, Vorrichtungen und Verfahren zur Reinigung von Reinigungsgut bereitzustellen, welche die beschriebenen Nachteile bekannter Vorrichtungen und Verfahren der genannten Art zumindest weitgehend vermeiden. Insbesondere sollen die Vorrichtungen und Verfahren einerseits einen hohen Durchsatz bei der Reinigung von Reinigungsgut gewährleisten und andererseits eine hohe Kosteneffizienz und eine hohe Flexibilität im Hinblick auf wechselnde Reinigungssituationen.

### Allgemeine Beschreibung der Erfindung

Diese Aufgabe wird adressiert durch ein Handhabungsmodul zur Beladung einer Transportvorrichtung einer Transportspülmaschine, durch ein Reinigungssystem und durch ein Verfahren zur Reinigung von Reinigungsgut, mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein Handhabungsmodul zur Beladung einer Transportvorrichtung einer Transportspülmaschine vorgeschlagen. Das Handhabungsmodul umfasst:
A. mindestens ein Wenderad zum Wenden mindestens eines Geschirrteils, wobei das Wenderad mindestens ein Geschirrteilfach aufweist;
B. mindestens eine Zuführrampe zum Zuführen des Geschirrteils zu dem Wenderad beispielsweise durch Schwerkraft; und
C. mindestens eine Beschickungsrampe zum Überführen des Geschirrteils von dem Wenderad zu einer Transportvorrichtung der Transportspülmaschine, wobei die Beschickungsrampe mindestens eine Entsorgungsöffnung aufweist.

Das Wenderad zwischen der Zuführrampe und der Beschickungsrampe angeordnet ist, wobei das Wenderad eingerichtet ist, um das über die Zuführrampe zugeführte Geschirrteil in einer Orientierung mit einer Benutzungsseite nach oben gerichtet in dem Geschirrteilfach aufzunehmen, wobei das Wenderad weiterhin eingerichtet ist, um das Geschirrteil zu wenden und mit der Benutzungsseite nach unten gerichtet auf die Beschickungsrampe aufzusetzen, wobei bei dem Aufsetzen auf der Benutzungsseite auf dem Geschirrteil aufgenommene Abfälle aufgrund ihrer Schwerkraft durch die Entsorgungsöffnung entsorgbar sind.

Der Begriff "Handhabungsmodul", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einheit beziehen welche eingerichtet ist, um eine Handhabungsfunktion zur Handhabung eines Gegenstands auszuführen. Insbesondere kann das Handhabungsmodul eine Einheit sein die eingerichtet ist für ein Einwirken, beispielsweise ein zerstörungsfreies Einwirken, auf einen handzuhabenden Gegenstand, beispielsweise auf das Geschirrteil. Das Einwirken kann beispielsweise eine Änderung der räumlichen Lage und/oder Orientierung und/oder eine Änderung eines Zustandes des Gegenstandes beinhalten, beispielsweise eine Reinigung oder Vorreinigung.

Der Begriff "Handhabungsfunktion, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen, bei welchem das Reinigungsgut in einer oder mehreren speziellen Weisen gehandhabt wird. Die Handhabung kann beispielsweise ausgewählt sein aus der Gruppe bestehend aus: Einer Umorientierung des Reinigungsguts und/oder Geschirrteils; einer Platzierung des Reinigungsguts und/oder Geschirrteils; einer Entleerung des Reinigungsguts und/oder Geschirrteils, beispielsweise zur Reinigung und/oder Vorreinigung und/oder zur Entnahme von Gegenständen. So kann das Handhabungsmodul beispielsweise eingerichtet sein, um auf eine Position und/oder Ausrichtung und/oder Zustand des handzuhabenden Gegenstandes, insbesondere des Reinigungsguts und/oder Geschirrteils, einzuwirken.

Der Begriff "Beladung", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen, bei welchem mindestens eine Art von Gut, insbesondere in diesem Fall Reinigungsgut und/oder ein oder mehrere Geschirrteile, in eine Vorrichtung eingebracht oder auf eine Vorrichtung aufgebracht wird. Die Beladung kann insbesondere vollständig oder teilweise automatisch erfolgen.

Der Begriff "Transportvorrichtung", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, welche eingerichtet ist, um mindestens eine andere Vorrichtung oder mindestens ein anderes Element, insbesondere Reinigungsgut und/oder ein oder mehrere Geschirrteile, zu transportieren und/oder eine Bewegung der anderen Vorrichtung oder des anderen Elements anzutreiben. Die Transportvorrichtung kann insbesondere mindestens ein Antriebselement umfassen, beispielsweise mindestens ein im Kreislauf durch die Reinigungskammer laufendes Antriebselement. Insbesondere kann die Transportvorrichtung, beispielsweise das Antriebselement, mindestens ein Element umfassen, ausgewählt aus der Gruppe bestehend aus: einem Transportband; Transportrollen, insbesondere angetriebenen Transportrollen; einer Gliederkette; ein Klinkentransportsystem. Der Transport kann dabei beispielsweise kontinuierlich oder auch diskontinuierlich oder getaktet erfolgen, so dass beispielsweise kontinuierlich arbeitende Transportspülmaschinen oder auch getaktete Spülmaschinen verwendet werden können. Die Transportrichtung kann beispielsweise eine Hauptrichtung einer Bewegung des Reinigungsguts innerhalb einer Reinigungskammer der Transportspülmaschine sein. Die Transportrichtung kann fest vorgegeben sein oder kann sich auch ändern, beispielsweise lokal oder auch zeitlich. Beispielsweise kann die Transportrichtung von einem Einlauf der Transportspülmaschine hin zu einem Auslauf gerichtet sein.

Der Begriff "Spülmaschine", auch allgemein als "Reinigungsvorrichtung" bezeichnet, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, welche eingerichtet ist, um Reinigungsgut, beispielsweise ein oder mehrere Geschirrteile, von anhaftenden makroskopischen oder auch mikroskopischen Verunreinigungen zu befreien oder derartige Verunreinigungen zumindest teilweise zu beseitigen. Zusätzlich kann optional eine Desinfektionswirkung ausgeübt werden. Die Spülmaschine kann insbesondere als Geschirrspülmaschine ausgestaltet sein.

Dementsprechend ist der Begriff "Transportspülmaschine", wie er hier verwendet wird, ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Spülmaschine im Sinne der obigen Definition beziehen, welche mindestens eine Transportvorrichtung aufweist. Insbesondere kann die Transportspülmaschine mindestens eine Reinigungskammer aufweisen, beispielsweise mindestens einen Reinigungstunnel, in welcher das Reinigungsgut und/oder ein oder mehrere Geschirrteile mit mindestens einem Reinigungsfluid beaufschlagt wird, insbesondere mittels mindestens einer Beaufschlagungsvorrichtung. Die Transportvorrichtung kann eingerichtet sein, um das Reinigungsgut durch die Reinigungskammer hindurch zu transportieren.

Der Begriff "Reinigungsgut", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf beliebige Gegenstände beziehen, welche mittels der Reinigungsvorrichtung gereinigt werden können. Dabei kann ein Gegenstand gereinigt werden, oder es können mehrere Gegenstände gleichzeitig oder sequentiell gereinigt werden. Dem Begriff "Geschirrteil" kann insbesondere dieselbe Bedeutung beigemessen werden wie dem Begriff "Reinigungsgut", daher sind die Begriffe "Reinigungsgut" und "Geschirrteil" beispielsweise austauschbar verwendbar. Insbesondere kann es sich bei dem Reinigungsgut um Gegenstände handeln, welche direkt oder indirekt für die Zubereitung, Aufbewahrung, Darreichung oder Aufnahme von Speisen verwendet werden, also beispielsweise Geschirr, Besteck, Tabletts, Schüsseln, Gläser, Tassen, Töpfe, Pfannen oder ähnliche Gegenstände. Dementsprechend kann die Reinigungsvorrichtung insbesondere als Geschirrspülmaschine ausgestaltet sein, beispielsweise als Geschirrspülmaschine für den gewerblichen Einsatz in Großküchen oder Küchen der Gemeinschaftsverpflegung. Auch andere Ausgestaltungen der Reinigungsvorrichtung und/oder des Reinigungsguts sind grundsätzlich möglich.

Der Begriff "Wenderad", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein beliebiges System und/oder Element beziehen, welches eingerichtet ist, um durch Drehung um mindestens eine Achse die Orientierung mindestens eines Gegenstands im Raum zu ändern. So kann das Wenderad beispielsweise eingerichtet sein, um das Geschirrteil zu wenden. Hierbei ist der Begriff "wenden", wie er hier verwendet wird, ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen bei welchem eine Orientierung und/oder eine Position eines beliebigen Gegenstands, beispielsweise eines beliebigen Elements, derart verändert wird, dass eine Ober- und eine Unterseite des Elements vertauscht werden. So kann die vor dem Wenden oben angeordnete Oberseite des Elements nach dem Wenden die unten angeordnete Unterseite des Elements sein, und umgekehrt. Insbesondere kann es sich beim Wenden um einen Vorgang handeln, bei dem der Gegenstand und/oder das Element um etwa 180° um eine horizontale Achse gedreht werden, insbesondere um eine orthogonal zu einer Schwerkraftrichtung angeordnete horizontale Achse. Beispielsweise kann das Wenden eine Drehung φ des Gegenstands umfassen, um 120° ≤ φ ≤ 240°, beispielsweise um 150° ≤ φ ≤ 210°, insbesondere um 160° ≤ φ ≤ 200°, vorzugsweise um 175° ≤ φ ≤ 185°.

Insbesondere kann durch das Wenden die Orientierung des Geschirrteils von einer nach oben geöffneten Position in eine nach unten geöffnete Position verändert werden. Der Begriff "nach oben", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Ausrichtung beziehen, in der ein Inhalt des Geschirrteils nicht aufgrund von Schwerkrafteinwirkungen herausfällt. Beispielsweise kann ein nach oben ausgerichtetes Geschirrteil in der Lage sein Inhalt aufzunehmen und diesen gegenüber der Schwerkraft abzustützen, beispielsweise durch eine konkav ausgebildete Seite des Geschirrteils.

Der Begriff "Geschirrteilfach", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Zone, beispielsweise auf einen Bereich, des Wenderads beziehen welcher eingerichtet ist, um mindestens ein Geschirrteil aufzunehmen. Insbesondere kann das Geschirrteilfach eingerichtet sein, um genau ein Geschirrteil aufzunehmen. Bei dem Geschirrteilfach kann es sich daher um eine Öffnung handeln in die das Geschirrteil eingelegt werden kann, beispielsweise die geeignet ist, um das Geschirrteil darin aufzunehmen. Das Wenderad kann beispielsweise eine Mehrzahl von Geschirrteilfächern aufweisen.

Der Begriff "Zuführrampe", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine geneigte Fläche, beispielsweise eine schiefe Ebene, beziehen über die ein beliebiges Element, beispielsweise ein Geschirrteil, gleiten und/oder rutschen kann. Beispielsweise kann es sich bei der Zuführrampe um eine Rutsche für Geschirrteile handeln. Dabei kann die Zuführrampe eine glatte Oberfläche aufweisen, beispielsweise eine glatte Oberfläche, welche ganz oder teilweise als metallische Oberfläche, beispielsweise eine Edelstahloberfläche, und/oder als glatte Oberfläche auch einem anderen Material, beispielsweise einem Kunststoffmaterial, ausgestaltet sein kann. Alternativ oder zusätzlich sind jedoch auch andere Gestaltungen und/oder Materialien der Oberfläche möglich. Weiterhin kann die Zuführrampe, alternativ oder zusätzlich, jedoch auch mit einer oder mehreren Rollen oder anderen Elementen ausgestaltet sein, welche ein Gleiten oder Rutschen unterstützen, beispielsweise Schienen, langgestreckten Vorsprüngen oder Rillen. Die Zuführrampe kann vorzugsweise eingerichtet sein, um ein Zuführen des Geschirrteils zu dem Wenderad zu ermöglichen.

Der Begriff "Beschickungsrampe", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einheit beziehen welche mindestens ein Geschirrteil von dem Wenderad zu der Transportvorrichtung der Transportspülmaschine überführt. Insbesondere kann die Beschickungsrampe beispielsweise das mindestens eine Geschirrteil entgegen oder mit einer Schwerkraft von dem Wenderad zu der Transportvorrichtung bringen. Die Beschickungsrampe kann beispielsweise ähnlich einem Transportband ausgeführt sein, beispielsweise zu einem schräg nach oben oder unten verlaufenden Transportband. Alternativ oder zusätzlich zu mindestens einem Transportband kann die Beschickungsrampe jedoch auch beispielsweise eine oder mehrere Rollen aufweisen, welche als passive Rollen oder auch als angetriebene Rollen ausgestaltet sein können. Wiederum alternativ oder zusätzlich kann die Beschickungsrampe jedoch auch ganz oder teilweise als Rutsche oder Gleitrampe ausgestaltet sein.

Der Begriff "Entsorgungsöffnung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Aussparung und/oder Öffnung beziehen durch die mindestens ein Material abgeschieden, insbesondere entsorgt, werden kann. Die Entsorgungsöffnung kann beispielsweise eine Öffnung sein durch die Abfälle durch Einwirkung der Schwerkraft hindurchfallen können. So können durch die Entsorgungsöffnung beispielsweise auf dem mindestens einen Geschirrteil aufgenommene Abfälle, insbesondere Speiseabfälle, aufgrund ihrer Schwerkraft entsorgbar sein.

Der Begriff "Benutzungsseite", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Funktionsfläche eines Gegenstands beziehen, die bei einem Einsatz des Gegenstands, insbesondere bei Benutzung des Gegenstands, verwendet wird. Beispielsweise kann die Benutzungsseite eines Geschirrteils diejenige Fläche und/oder Seite des Geschirrteils umfassen, welche die Speisen trägt. So kann die Benutzungsseite eines Tellers insbesondere die Innenfläche des Tellers, auf dem die Speisen angeordnet werden, sein und die Benutzungsseite einer Tasse kann beispielsweise die Innenfläche der Tassenöffnung sein, in der bei einer gefüllten Tasse die Flüssigkeit aufgenommen ist. Bei einem Tablett ist die Benutzungsseite vorzugsweise diejenige Seite auf der, beim Verwenden des Tabletts, übrige Geschirrteile wie beispielsweise Teller, Tassen und Gläser abgestellt werden. Üblicherweise kann die Benutzungsseite des mindestens einen Geschirrteils nach dem Essen, insbesondere nach einer Mahlzeit, die durch Essensreste verschmutzte Seite des Geschirrteils sein.

Der Begriff "Aufsetzen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen bei dem ein beliebiger Gegenstand durch räumliche Bewegung auf einem anderen Gegenstand platziert wird. Das Aufsetzen kann insbesondere ein Abstellen und/oder Ablegen umfassen. Insbesondere kann das Aufsetzen derart erfolgen, dass der aufgesetzte Gegenstand beim Auftreffen auf die Oberfläche, auf welche dieser aufgesetzt werden soll, eine Restgeschwindigkeit oder einen Restimpuls aufweist, so dass der aufgesetzte Gegenstand abrupt abgebremst wird. Diese Art des Aufsetzens kann auch als "Aufschlagen" bezeichnet werden, wie nachfolgend näher erläutert wird.

So kann das Wenderad insbesondere eingerichtet sein, um das Geschirrteil mit der Benutzungsseite nach unten auf die Beschickungsrampe aufzuschlagen. Der Begriff "aufschlagen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang des Aufsetzens beziehen, wobei beim Aufsetzen des Gegenstands auf dem anderen Gegenstand ein Impuls übertragen wird. Insbesondere kann eine Bewegung des aufzugschlagenden Gegenstands beim Aufsetzen auf dem anderen Gegenstand durch den anderen Gegenstand abrupt abgebremst werden. Durch das Aufschlagen des Geschirrteils mit der Benutzungsseite nach unten auf der Beschickungsrampe können beispielsweise auf der Benutzungsseite angeordnete Verschmutzungen, insbesondere Essensreste, durch die abrupte Abbremsung der Bewegung weitergeschleudert werden. So können die Verschmutzungen beispielsweise von der Benutzungsseite des Geschirrteils gelöst und entfernt werden. So kann das Wenderad insbesondere derart eingerichtet sein, dass das Geschirrteil, insbesondere mit der Benutzungsseite nach unten, mit einer Geschwindigkeit vom 0,5 m/s bis 4 m/s, insbesondere 2 m/s, auf die Beschickungsrampe aufschlägt.

Das Wenderad kann insbesondere eine Mehrzahl von sich radial erstreckenden Transportfingern umfassen. Der Begriff "Transportfinger", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein langgestrecktes Element, beispielsweise ähnlich zu einem Finger, beziehen. Diese Transportfinger können sich von einer Oberfläche des Wenderads aus in den Raum erstrecken. Der Transportfinger kann beispielsweise eine oder mehrere Ausbuchtungen und/oder Ecken, vorzugsweise sogar ein oder mehrere Hinterschneidungen, aufweisen mittels derer der Transportfinger in der Lage ist mindestens einen Gegenstand zu transportieren und/oder zu bewegen, vorzugsweise mitzunehmen. Insbesondere kann der Transportfinger derart ausgestaltet sein, um den mindestens einen Gegenstand mitzunehmen, also seine Bewegung auf den Gegenstand zu übertragen. So kann der Transportfinger beispielsweise mittels der mindestens einen Ausbuchtung und/oder Ecke beispielsweise seine eigene Bewegung auf den zu transportierenden Gegenstand übertragen, indem er sich beispielsweise an dem Gegenstand einhakt und/oder sich in dem Gegenstand verhakt. Insbesondere können sich die Transportfinger von einer Drehachse des Wenderads, beispielsweise von einer zentralen Achse des Wenderads, radial nach außen erstrecken. Die Transportfinger können beispielsweise das mindestens eine Geschirrteilfach bilden. So können beispielsweise zwei Transportfinger das Geschirrteilfach bilden und das mindesten eine Geschirrteil vorzugsweise durch Einhaken transportieren. Andere Formen der Mitnahme, beispielsweise durch Reibung und/oder aktives Festklemmen, sind ebenfalls denkbar.

Das Wenderad kann insbesondere eine rotierbare Trommel mit einer Umfangsfläche umfassen, wobei sich die Transportfinger radial von der Umfangsfläche erstrecken. Insbesondere können sich die Transportfinger von einer rotierbaren zylinderförmigen Trommel radial nach außen erstrecken.

Alternativ oder zusätzlich kann das Wenderad zwei Scheiben umfassen, von denen sich die Transportfinger beispielsweise radial erstrecken, ähnlich der Zähne zweier Zahnräder. Derart ausgebildete Scheiben können beispielsweise an eine Geometrie des mindestens einen Geschirrteils angepasst werden. Insbesondere kann ein Abstand der Scheiben des Wenderads beispielsweise an die Geometrie des Geschirrteils angepasst werden und so, vorzugsweise adaptiv, für unterschiedliche Geschirrteilgeometrien verwendbar sein. Allgemein kann somit die breite des Wenderrads, beispielsweise eine Ausdehnung senkrecht zu einer Bewegungsrichtung des Geschirrteils, einstellbar und/oder veränderbar sein.

Das Wenderad kann eine Mehrzahl von Mitnehmern aufweisen, wobei die Mitnehmer beispielsweise das mindestens eine Geschirrteilfach bilden können. Der Begriff "Mitnehmer", wie er hier verwendet wird ist ein weiter Begriff, dem seine gewöhnliche und gängige Bedeutung beigemessen werden soll, wie der Fachmann sie versteht. Der Begriff ist nicht beschränkt auf eine spezielle oder besondere Bedeutung. Der Begriff kann, ohne Beschränkung, sich insbesondere beziehen auf ein beliebig ausgeformtes Element, das eingerichtet ist, um seine eigene Bewegung auf mindestens einen Gegenstand zu übertragen. Beispielsweise kann der Mitnehmer derart ausgestaltet sein, dass eine Bewegung des Mitnehmers auf mindestens einen Gegenstand, beispielsweise ein Geschirrteil, übertragen werden kann. Insbesondere kann der Mitnehmer ein Element sein, das in der Lage ist, beispielsweise aufgrund seiner Gestalt und/oder Ausgestaltung, durch seine Eigenbewegung das Geschirrteil mitzunehmen, insbesondere mit zu reißen. Insbesondere kann der Mitnehmer beispielsweise ein sich von der Oberfläche des Wenderads radial nach außen erstreckendes Element sein. Der Mitnehmer ist vorzugsweise derart ausgestaltet, dass eine Bewegung des Mitnehmers, insbesondere eine Drehbewegung des Wenderads, auf das mindestens eine Geschirrteil übertragen werden kann.

Die Mitnehmer können vorzugsweise auswechselbar, beispielsweise durch Aufschrauben, an dem Wenderad befestigt sein. Alternativ kann das die Mitnehmer aufweisende Wenderad auch einstückig, beispielsweise vollständig einstückig, ausgeführt sein.

Insbesondere kann die Ausgestaltung des Wenderads mit einer Mehrzahl von Mitnehmern beispielsweise eine Alternative zu einer Ausgestaltung des Wenderads mit den oben beschriebenen Transportfingern sein. Auch eine gemischte Ausgestaltung des Wenderads, bei der sowohl Mitnehmer als auch Transportfinger vorhanden sind, ist möglich.

Die Mitnehmer können beispielsweise jeweils mindestens eine Wendegeometrie aufweisen. Der Begriff "Wendegeometrie", auch als "Wendekontur" bezeichnet, wie er hier verwendet wird ist ein weiter Begriff, dem seine gewöhnliche und gängige Bedeutung beigemessen werden soll, wie der Fachmann sie versteht. Der Begriff ist nicht beschränkt auf eine spezielle oder besondere Bedeutung. Der Begriff kann, ohne Beschränkung, sich insbesondere beziehen auf eine Form und/oder eine Gestalt, vorzugsweise eine Oberflächenkontur, eines beliebigen Elements, welches eingerichtet ist, um eine räumliche Orientierung mindestens eines Gegenstands zu verändern, insbesondere diesen Gegenstand zu wenden. In Bezug auf den Begriff "wenden" wird auf die obigen Ausführungen verwiesen. Beispielsweise kann der die Wendegeometrie aufweisende Mitnehmer eingerichtet sein, um in eine obere Seite des Geschirrteils, beispielsweise in eine konkav ausgestaltete Seite des Geschirrteils, einzugreifen und so beispielsweise geeignet sein, um in Verbindung mit einer Drehung des Wenderad das Geschirrteil zu wenden.

Die Mitnehmer können beispielsweise jeweils mindestens eine Niederhaltergeometrie aufweisen. Der Begriff "Niederhaltergeometrie", auch als "Niederhalterkontur" bezeichnet, wie er hier verwendet wird ist ein weiter Begriff, dem seine gewöhnliche und gängige Bedeutung beigemessen werden soll, wie der Fachmann sie versteht. Der Begriff ist nicht beschränkt auf eine spezielle oder besondere Bedeutung. Der Begriff kann, ohne Beschränkung, sich insbesondere beziehen auf eine Form und/oder eine Gestalt, vorzugsweise eine Oberflächenkontur, eines beliebigen Elements, welches eingerichtet ist, um mindestens einen Gegenstand zu halten und/oder zu unterstützen, vorzugsweise während eines Wendevorgangs. Beispielsweise kann der die Niederhaltergeometrie aufweisende Mitnehmer eingerichtet sein, um an einer unteren Seite des Geschirrteils einzugreifen und/oder anzuliegen, beispielsweise das Geschirrteil an einer konvex ausgestalteten Seite des Geschirrteils zu berühren. So kann der die Niederhaltergeometrie aufweisende Mitnehmer insbesondere als Niederhalter ausgestaltet sein.

Beispielsweise können die Mitnehmer auch jeweils sowohl mindestens eine Wendegeometrie als auch mindestens eine Niederhaltergeometrie aufweisen. Insbesondere können die Wendegeometrie und die Niederhaltergeometrie beispielsweise auf entgegengesetzten Seiten der jeweiligen Mitnehmer angeordnet sein. So kann jeder Mitnehmer beispielsweise auf einer Seite eine Wendegeometrie aufweisen und auf einer entgegengesetzten Seite eine Niederhaltergeometrie aufweisen. Beispielsweise kann eine in Umfangsrichtung des Wenderads, insbesondere in Bezug auf eine vorzugsweise Drehrichtung des Wenderads, vorauslaufende Geometrie des Mitnehmers eine Niederhaltergeometrie aufweisen und eine nachlaufende Geometrie des Mitnehmers eine Wendegeometrie aufweisen.

Insbesondere können die Mitnehmer reversibel, beispielsweise austauschbar, mit dem Wenderad verbindbar sein. Beispielsweise kann eine Austauschbarkeit der Mitnehmer vorteilhaft sein, um eine Anpassung des Wenderads an verschiedene Geschirrteile, beispielsweise unterschiedlich ausgeformte Geschirrteile, zu ermöglichen. So können die Mitnehmer insbesondere mit Hilfe eines Verbindungsmittels, beispielsweise durch Schrauben und/oder Stecker, an dem Wenderad befestigbar sein.

Das Wenderad kann weiterhin eine Mehrzahl von Leitstrukturen aufweisen. Beispielsweise kann das die Leitstrukturen aufweisende Wenderad einstückig, vorzugsweise vollständig einstückig, ausgeführt sein. Insbesondere können die Leitstrukturen und die Mitnehmer des Wenderad, beispielsweise gemeinsam, das mindestens eine Geschirrteilfach ausbilden. Der Begriff "Leitstruktur", wie er hier verwendet wird ist ein weiter Begriff, dem seine gewöhnliche und gängige Bedeutung beigemessen werden soll, wie der Fachmann sie versteht. Der Begriff ist nicht beschränkt auf eine spezielle oder besondere Bedeutung. Der Begriff kann, ohne Beschränkung, sich insbesondere beziehen auf ein beliebiges Element, welches aufgrund seiner Form und/oder seiner Gestalt, vorzugsweise seiner Oberflächenkontur, eingerichtet ist mindestens einen Gegenstand in seiner Bewegung zu leiten und/oder zu lenken, vorzugsweise eine Bewegung des Gegenstands in zumindest eine Richtung zu beschränken. Insbesondere kann die Leitstruktur beispielsweise an eine Gestalt und/oder eine Form des Gegenstands angepasst sein. So kann die Leitstruktur beispielsweise an die Geometrie des Geschirrteils angepasst werden und so, vorzugsweise adaptiv, für unterschiedliche Geschirrteilgeometrien verwendbar sein. Insbesondere kann die Leitstruktur also beispielsweise auch an die Gestalt und/oder die Form von einer Vielzahl von Geschirrteilen angepasst sein, beispielsweise von unterschiedlichen Geschirrteilen, zum Beispiel an die Gestalt und/oder die Form von verschieden ausgestalteten Tellern, Tassen, Schüsseln, Schalen und/oder Gläsern.

Jede der Leitstrukturen kann jeweils mindestens eine Leitkontur aufweisen. Der Begriff "Leitkontur", wie er hier verwendet wird ist ein weiter Begriff, dem seine gewöhnliche und gängige Bedeutung beigemessen werden soll, wie der Fachmann sie versteht. Der Begriff ist nicht beschränkt auf eine spezielle oder besondere Bedeutung. Der Begriff kann, ohne Beschränkung, sich insbesondere beziehen auf eine Begrenzung, insbesondere auf eine zweidimensionale oder dreidimensionale Grenze, eines beliebigen Elements, entlang derer eine Bewegung eines Gegenstands geführt werden kann, insbesondere dessen Bewegung begrenzt werden kann. Insbesondere kann die mindestens eine Leitkontur dabei beispielsweise eine an der Leitstruktur ausgebildete Begrenzung sein, welche eingerichtet ist, um eine Bewegung des Geschirrteils zu begrenzen und/oder entlang derer die Bewegung des Geschirrteils geführt werden kann. So kann die Leitkontur beispielsweise unterschiedliche Geometrien und/oder Formen aufweisen, insbesondere Geometrien und/oder Formen, die angepasst sind an die Geometrie des Geschirrteils, vorzugsweise an unterschiedliche Geschirrteilgeometrien.

So ist es zum Beispiel möglich, dass die Leitkontur einen Radius und/oder einen Durchmesser aufweist, der einem Außenradius und/oder einem Außendurchmesser des Geschirrteils entspricht. Alternativ oder zusätzlich kann die Leitkontur der Leitstruktur eine äußere Form, beispielsweise eine Hüllgeometrie, des Geschirrteils aufweisen. Weiterhin alternativ oder zusätzlich kann die Leitkontur beispielsweise einen lichten Umriss, insbesondere ein Lichtraumprofil, des Geschirrteils aufweisen. Beispielsweise können die Leitkonturen an eine runde Form und/oder an eine eckige Form von Geschirrteilen, beispielsweise von Tellern, Tassen, Schüsseln, Schalen und/oder Gläsern, angepasst sein. Vorzugsweise können die Leitkonturen sowohl an runde als auch an eckige Geschirrteile angepasst sein, insbesondere sowohl an ein rund geformtes Geschirrteil als auch an ein eckig geformtes Geschirrteil, beispielsweise an Schalen, Schüsseln und/oder Teller. Auch eine Anpassung an weitere geometrische Formen, wie beispielsweise an Geschirrteile mit einer mehreckigen Grundform, insbesondere eine vieleckige Grundform, zum Beispiel einer dreieckigen und/oder sechseckigen Grundform. Auch weitere Anpassungen sind möglich.

Insbesondere können die Leitstrukturen reversibel, beispielsweise austauschbar, mit dem Wenderad verbindbar sein. Beispielsweise kann eine Austauschbarkeit der Leitstrukturen vorteilhaft sein, um eine Anpassung des Wenderads an verschiedene Geschirrteile, beispielsweise unterschiedlich ausgeformte Geschirrteile, zu ermöglichen. So können die Leitstrukturen insbesondere mit Hilfe eines Verbindungsmittels, beispielsweise durch Schrauben und/oder Stecker, an dem Wenderad befestigbar sein.

Zum Beispiel können die Leitstrukturen des Wenderads jeweils mindestens drei Leitkonturen aufweisen, beispielsweise mindestens eine konkave Leitkontur und zwei Leitkanten. Insbesondere können die Leitstrukturen eine mittig angeordnete konkave Leitkontur aufweisen, wobei die mittige Anordnung sich insbesondere beziehen kann auf das Geschirrteil, insbesondere auf die Geometrie und/oder Form des Geschirrteils. Weiterhin können die Leitstrukturen jeweils zwei Leitkanten aufweisen. Der Begriff "Leitkante", wie er hier verwendet wird ist ein weiter Begriff, dem seine gewöhnliche und gängige Bedeutung beigemessen werden soll, wie der Fachmann sie versteht. Der Begriff ist nicht beschränkt auf eine spezielle oder besondere Bedeutung. Der Begriff kann, ohne Beschränkung, sich insbesondere beziehen auf eine einer Leitstruktur zugeordnete Kante und/oder Grenze, beispielsweise auf eine Leitkontur, welche einen Abschluss und/oder Rand einer Leitstruktur bildet. So können die Leitstrukturen jeweils beispielsweise zwei symmetrisch angeordnete Leitkanten aufweisen, welche die Leitstruktur, insbesondere die Form und/oder Geometrie der Leitstruktur, begrenzen. Vorzugsweise können die Leitkanten dabei seitlich der mittleren konkaven Leitkontur angeordnet sein. Insbesondere kann eine derartige Ausgestaltung der Leitstrukturen des Wenderads beispielsweise dazu dienen, um das Geschirrteil bei einem Wenden durch das Wenderad zentriert auszurichten, und so beispielsweise eine Verarbeitung zu erleichtern.

Insbesondere kann das Wenderad beispielsweise eine glattflächige Oberfläche aufweisen. So kann das Wenderad beispielsweise eine Oberfläche aufweisen, welche gut zu reinigen ist. Insbesondere kann die Oberfläche des Wenderad beispielsweise derart ausgestaltet sein, um eine Anhaftung von Abfall, insbesondere von Speiseresten, zu unterbinden und/oder zu mindern. Weiterhin kann das Wenderad beispielsweise als geschlossener Körper ausgestaltet sein. So kann das Wenderad beispielsweise eine geschlossene Oberfläche, insbesondere Hülle, aufweisen, beispielsweise als geschlossener Körper ausgestaltet sein.

Das Wenderad kann beispielsweise einen einstückig hergestellten Grundkörper aufweisen. So kann beispielsweise das Wenderad mit den Leitstrukturen einen einstückigen Körper ausbilden.

Insbesondere kann das Wenderad beispielsweise einen einstückigen Körper ausbilden, vorzugsweise aus Kunststoff, beispielsweise aus einem Kunststoff zur Verringerung von Laufgeräuschen und/oder zur Minderung von Abrieb, beispielsweise zur Vermeidung von Abrieb an den Geschirrteilen. Das Wenderad kann insbesondere mindestens einen Antrieb umfassen. Der Begriff "Antrieb", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein beliebiges Element beziehen, welches zu einer Erzeugung von Bewegung, beispielsweise durch Umwandlung von Energie, eingerichtet ist. So kann der Antrieb beispielsweise einen Motor aufweisen. Insbesondere kann der Antrieb beispielsweise eingerichtet sein, um das Wenderad um mindestens eine Achse zu drehen, vorzugsweise um die Drehung des Wenderads um die mindestens eine Achse anzutreiben. Beispielsweise kann der Antrieb das Wenderad kontinuierlich antreiben. So kann der Antrieb insbesondere eingerichtet sein, um das Wenderad gleichförmig, insbesondere mit konstanter Geschwindigkeit, anzutreiben. Beispielsweise kann der Antrieb auch ein oder mehrere weitere Elemente aufweisen, beispielsweise ein oder mehrere Übertragungselemente, wie beispielsweise Kupplungen, Zahnräder, Schneckenräder, Riemen, insbesondere Zahn- oder Reibriemen, Ketten oder ähnliches.

Das Handhabungsmodul kann beispielsweise weiterhin mindestens eine Entsorgungsöffnung aufweisen. Insbesondere können die Abfälle aufgrund ihrer Schwerkraft über die Entsorgungsöffnung in mindestens eine Entsorgungsvorrichtung, beispielsweise in einem Abfallbehandlungssystem, entsorgbar sein, beispielsweise in mindestens eine Entsorgungsvorrichtung ausgewählt aus der Gruppe bestehend aus einem Entsorgungsschacht und einem Entsorgungsbehälter; einer Zerkleinerungseinrichtung, beispielsweise einem Mahlwerk.

Insbesondere kann die Entsorgungsvorrichtung in dem Handhabungsmodul integriert sein. Beispielsweise kann das Handhabungsmodul die Entsorgungsvorrichtung umfassen. So kann das Handhabungsmodul beispielsweise eine Zerkleinerungseinrichtung sowie einen Tank zur Zwischenspeicherung von zerkleinerten Abfällen aufweisen. Alternativ oder zusätzlich kann das Handhabungsmodul weitere Elemente wie beispielsweise mindestens eine Pumpe und/oder ein Ventil, insbesondere zur Verwendung in der Entsorgungsvorrichtung, aufweisen. Das Handhabungsmodul kann insbesondere an ein automatisches System zur Entsorgung der Abfälle angeschlossen sein. Beispielsweise kann das Handhabungsmodul das automatische System zur Entsorgung auch umfassen, so dass auf Personal, beispielsweise zur Leerung von Entsorgungsbehältern, verzichtet werden kann.

Die Beschickungsrampe kann zumindest teilweise als Rutsche ausgestaltet sein. Insbesondere kann die Beschickungsrampe derart ausgestaltet sein, dass das mindestens eine Geschirrteil die Beschickungsrampe von dem Wenderad zu der Transportvorrichtung der Transportspülmaschine herunter rutschen kann. Insbesondere kann die Beschickungsrampe ganz oder teilweise als elastische Rutsche ausgestaltet sein.

Beispielsweise kann die Beschickungsrampe eine Neigung α gegenüber einer horizontalen Ebene aufweisen. Insbesondere kann die Neigung α gegenüber einer horizontalen Ebene 5° ≤ α ≤ 70° betragen. Beispielsweise kann die Neigung α gegenüber einer horizontalen Ebene 10° ≤ α ≤ 45° betragen. Bevorzugt kann die Neigung α gegenüber einer horizontalen Ebene 15° ≤ α ≤ 35° betragen. Besonders bevorzugt kann die Neigung α gegenüber einer horizontalen Ebene α = 25° betragen.

Allgemein kann die Beschickungsrampe beispielsweise mit mindestens einer elastischen Aufschlagfläche ausgestaltet sein. Vorzugsweise kann die Beschickungsrampe ganz oder teilweise elastisch und/oder federnd ausgeführt sein. Insbesondere kann die Beschickungsrampe beispielsweise durch Verwendung von mindestens einem federnden und/oder elastischen Material, beispielsweise einem federnden und/oder elastischen Kunststoff, als elastische Rutsche ausgestaltet sein. Insbesondere kann der federnde und/oder elastische Kunststoff mindestens ein federndes und/oder elastisches Material aufweisen, ausgewählt aus der Gruppe bestehend aus: Polyethylen, Polypropylen, Polyurethan, Silikon, Kautschuk. So kann beispielsweise eine Bewegung des mindestens einen die Beschickungsrampe herunter gleitenden Geschirrteils beim Abschlagen durch eine elastische Ausgestaltung der Beschickungsrampe abgefedert werden. Beispielsweise kann eine elastische Ausgestaltung der Beschickungsrampe auch eine Geräuschentwicklung abdämpfen und/oder abmildern.

Weiterhin kann beispielsweise die Zuführrampe zumindest teilweise als Rutsche ausgestaltet sein. So kann die Zuführrampe beispielsweise derart ausgestaltet sein, dass das mindestens eine Geschirrteil die Zuführrampe zu dem Wenderad herunter rutschen kann. Insbesondere kann die Zuführrampe als elastische Rutsche ausgestaltet sein, beispielsweise mit einer glatten Oberfläche, welche federnd gelagert ist und/oder welche selbst aus einem elastischen Material hergestellt ist. Wiederum alternativ oder zusätzlich kann die Zuführrampe auch ganz oder teilweise mit Rollen ausgestaltet sein.

Vorzugsweise kann die Zuführrampe ganz oder teilweise elastisch und/oder federnd ausgeführt sein. Insbesondere kann die Zuführrampe beispielsweise durch Verwendung von mindestens einem federnden und/oder elastischen Material, beispielsweise einem federnden und/oder elastischen Kunststoff, als elastische Rutsche ausgestaltet sein. Insbesondere kann der federnde und/oder elastische Kunststoff mindestens ein federndes und/oder elastisches Material aufweisen, ausgewählt aus der Gruppe bestehend aus: Polyethylen, Polypropylen, Polyurethan, Silikon, Kautschuk. So kann beispielsweise eine Bewegung des mindestens einen die Zuführrampe herunter rutschenden Geschirrteils durch eine elastische Ausgestaltung der Zuführrampe abgefedert werden. Beispielsweise kann eine elastische Ausgestaltung der Zuführrampe auch eine Geräuschentwicklung abdämpfen und/oder abmildern.

Beispielsweise kann die Zuführrampe eine Neigung β gegenüber einer horizontalen Ebene aufweisen. Insbesondere kann die Neigung β gegenüber einer horizontalen Ebene 5° ≤ β ≤ 70° betragen. Beispielsweise kann die Neigung β gegenüber einer horizontalen Ebene 10° ≤ β ≤ 45° betragen. Bevorzugt kann die Neigung β gegenüber einer horizontalen Ebene 15° ≤ β ≤ 35° betragen. Besonders bevorzugt kann die Neigung β gegenüber einer horizontalen Ebene β = 25° betragen.

Das Wenderad kann insbesondere zumindest teilweise in die Zuführrampe eingreifen. Der Begriff "eingreifen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Überlappvorgang beziehen, bei welchem in einem Überlappungsbereich, eine nachfolgende Einheit bereits eine Führung eines Gegenstands aufnimmt, obwohl die vorangehende Einheit den Gegenstand noch führt. Insbesondere kann beispielsweise das Wenderad zumindest teilweise, insbesondere innerhalb eines Überlappungsbereichs, in die Zuführrampe eingreifen, um eine Führung des Geschirrteils zumindest teilweise, beispielsweise in dem Überlappungsbereich, schon aufzunehmen. Das Eingreifen kann beispielsweise auch als ein Durchtauchen bezeichnet werden. Insbesondere kann durch das Eingreifen eine sichere Übergabe des Geschirrteils von der Zuführrampe an das Wenderad ermöglicht werden.

Beispielsweise können insbesondere die Transportfinger des Wenderads in die Zuführrampe eingreifen. So können die Transportfinger des Wenderads vorzugsweise in Schlitze in der Zuführrampe eingreifen, beispielsweise in extra für das Eingreifen vorgesehene Schlitze in der Zuführrampe.

Insbesondere können die Mitnehmer des Wenderads in die Zuführrampe eingreifen. So können die Mitnehmer des Wenderads vorzugsweise in Schlitze in der Zuführrampe eingreifen, beispielsweise in extra für das Eingreifen vorgesehene Schlitze in der Zuführrampe.

Weiterhin kann das Wenderad beispielsweise zumindest teilweise in die Beschickungsrampe eingreifen. Insbesondere kann das Wenderad zumindest teilweise in die Beschickungsrampe eingreifen, um das Geschirrteil in einem Überlappungsbereich an die Beschickungsrampe zu übergeben.

Insbesondere können die Transportfinger des Wenderads beispielsweise in die Beschickungsrampe eingreifen. So können die Transportfinger des Wenderads insbesondere in Schlitze in der Beschickungsrampe eingreifen.

Insbesondere können die Mitnehmer des Wenderads in die Beschickungsrampe eingreifen. So können die Mitnehmer des Wenderads vorzugsweise in Schlitze in der Beschickungsrampe eingreifen, beispielsweise in extra für das Eingreifen vorgesehene Schlitze in der Beschickungsrampe.

Weiterhin kann das Handhabungsmodul beispielsweise mindestens eine Geschirrteilbremse auf der Zuführrampe und/oder quer vor der Zuführrampe aufweisen. Insbesondere kann die Geschirrteilbremse eingerichtet sein, um das Geschirrteil auf der Zuführrampe zumindest vorübergehend zu bremsen. Der Begriff "Geschirrteilbremse", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Rückhaltevorrichtung beziehen, welche eingerichtet ist, um das mindestens eine Geschirrteil zumindest vorübergehend zurückzuhalten und/oder zu bremsen.

Die Geschirrteilbremse kann mindestens eine Leiste umfassen, beispielsweise eine leistenartige Bremse aufweisen, beispielsweise eine auf der Zuführrampe und/oder vor der Zuführrampe angeordnete leistenartige Bremse. Insbesondere kann sich die leistenartige Bremse dabei beispielsweise quer zu einer Bewegungsrichtung des Geschirrteils erstrecken.

Insbesondere kann die Geschirrteilbremse beispielsweise zwei Stopper umfassen. Die Stopper können dabei jeweils als Finger ausgestaltet sein, insbesondere eine längliche Form aufweisen. Beispielsweise können die Stopper seitlich des Wenderads, insbesondere im Bereich der Zuführrampe, angeordnet sein. Die Stopper können beispielsweise ganz oder teilweise in dem Überlappungsbereich von der Zuführrampe zu dem Wenderad, insbesondere ganz oder teilweise in einer Übergabezone, angeordnet sein. Auch eine Anordnung vor dem Überlappungsbereich ist grundsätzlich möglich. So können die Stopper beispielsweise auf der Zuführrampe angeordnet sein, um das Geschirrteil bereits vor Erreichen des Wenderads, zum Beispiel vor Erreichen des Überlappungsbereichs zwischen Zuführrampe und Wenderad, zu bremsen.

Die Stopper können beispielsweise eine Bewegung parallel zu einer Bewegungsrichtung des Geschirrteils ausführen. So können sich die Stopper insbesondere parallel zur Bewegungsrichtung des mindestens einen Geschirrteils bewegen. In Bezug auf eine Ebene der Zuführrampe, beispielsweise auf eine Oberfläche der Zuführrampe, können die Stopper, insbesondere die als Finger ausgestalteten Stopper, zum Beispiel auch eine Bewegung ausführen die von einer Parallele abweicht. So kann sich ein Überstand der Stopper über der Ebene der Zuführrampe, insbesondere ein Überstand der als Finger ausgestalteten Stopper über der Oberfläche der Zuführrampe, während der Bewegung der Stopper verändern, beispielsweise verkleinern oder vergrößern. Insbesondere kann sich der Überstand der Stopper über der Oberfläche der Zuführrampe in Bewegungsrichtung des mindestens einen Geschirrteils verringern, beispielsweise von einer oberen Position zu einer unteren Position hin verkleinern.

Beispielsweise können sich die zwei Stopper der Geschirrteilbremse parallel bewegen. Insbesondere können beispielsweise durch die zwei sich parallel bewegenden Stopper die Geschirrteile, insbesondere rund ausgeformte Geschirrteile wie beispielsweise runde Teller und/oder runde Schalen, in vorteilhafter Weise bezogen auf das Wenderad zentriert werden.

Insbesondere kann jedem der mindestens zwei Stopper eine eigene umlaufende Transporteinrichtung, beispielsweise eine Kette, zugeordnet sein. Die jedem der mindestens zwei Stopper zugeordnete eigene umlaufende Kette kann dabei die Bewegung der Stopper, insbesondere die Bewegung parallel zu einer Bewegungsrichtung des Geschirrteils, antreiben. Beispielsweise können derart angetriebene Stopper vorzugsweise eine umlaufende Bewegung ausführen.

Alternativ oder zusätzlich können die mindestens zwei Stopper, insbesondere mindestens ein Stopperpaar, auch auf einer gemeinsame Trägerleiste befestigt sein. Dabei kann die gemeinsame Trägerleiste beispielsweise durch mindestens eine Kette angetrieben werden. Beispielsweise können derart angetriebene Stopper vorzugsweise eine umlaufende Bewegung ausführen. So können die zwei auf einer gemeinsamen Trägerleiste befestigten Stopper beispielsweise über die Kette, insbesondere über eine gemeinsame Kette, angetrieben werden. Bei einer derartigen Ausgestaltung ist es beispielsweise in vorteilhafter Weise möglich, dass die Kette unterhalb der Zuführrampe angeordnet sein kann. Beispielsweise kann die unterhalb der Zuführrampe angeordnete Kette dabei gut gegen Verschmutzung, insbesondere vor herabfallenden Speiseresten, beispielsweise Schmutz, geschützt sein.

Die Stopper der Geschirrteilbremse, insbesondere die mindestens zwei Stopper, können beispielsweise seitlich an der Zuführrampe angeordnet sein. Dabei können die Stopper insbesondere derart seitlich an der Zuführrampe angeordnet sein, um das Geschirrteil mittels Reibungskräften vorübergehend zu bremsen.

Insbesondere kann die Geschirrteilbremse, beispielsweise die Rückhaltevorrichtung, mit dem Wenderad, zum Beispiel mit der Drehung des Wenderads, synchronisiert sein. Insbesondere kann die Bewegung der Geschirrteilbremse synchron zu der Drehung des Wenderads stattfinden.

Zum Beispiel können sich die Stopper der Geschirrteilbremse in der unteren Position, insbesondere in einer unteren Endlage, befinden, wenn das Wenderad, insbesondere die Transportfinger und/oder die Mitnehmer des Wenderads, sich in einer Position, z.B. in einer Drehposition, befindet in der das Geschirrteilfach des Wenderads derart positioniert ist, dass das Geschirrteil in dem Geschirrteilfach des Wenderads aufgenommen werden kann. So können die Stopper sich insbesondere in der unteren Position, insbesondere in der unteren Endlage befinden, wenn das Geschirrteilfach des Wenderads, beispielsweise das durch die Transportfinger und/oder die Mitnehmer gebildete Geschirrteilfach des Wenderads, zur Zuführrampe hin geöffnet ist, insbesondere eine direkte Zuführung des Geschirrteils in das Geschirrteilfach möglich ist. Durch eine weitere Drehung des Wenderads kann das in dem Geschirrteilfach aufgenommene Geschirrteil nun bereits weitertransportiert werden, während die Geschirrteilbremse, beispielsweise entgegen der Bewegungsrichtung der Geschirrteile auf der Zuführrampe, bis in eine obere Endlage bewegt werden kann. Auf diese Weise kann die Geschirrteilbremse beispielsweise ein zwischenzeitlich auf der Zuführrampe angelangtes Geschirrteil aufhalten und/oder bremsen, um zum Beispiel zu verhindern, dass das Geschirrteil gegen das Wenderad prallt, wenn das Geschirrteilfach zur Zuführrampe hin geschlossen ist. Wenn keine Aufnahmeöffnung des Wenderads zur Zuführrampe hin positioniert ist, können sich daher die Stopper beispielsweise in ihrer oberen Endlage befinden. Das durch die Geschirrteilbremse gebremste und/oder aufgehaltene Geschirrteil kann nun durch die Bewegung der Geschirrteilbremse in einer Geschwindigkeit fortbewegt werden, dass durch die synchrone Weiterdrehung des Wenderads das Geschirrteil in das nächste freie Geschirrteilfach des Wenderads aufgenommen wird. Insbesondere können sich also während der Drehung des Wenderads die Stopper, beispielsweise synchron, nach unten in Richtung der Achse des Wenderads bewegen. Wenn sich das Wenderad in einer Position befindet in der das Geschirrteilfach, beispielsweise eine Aufnahmeöffnung des Wenderads, zur Zuführrampe hin geöffnet ist, können die Stopper ihre untere Endlage erreicht haben. In dieser Position könnte somit dann das Geschirrteil freigegeben und an das Wenderad übergeben werden. Während der weiteren Drehung des Wenderads, z.B. mit einem aufgenommenen Geschirrteil, können sich die Stopper dann insbesondere wieder in ihre obere Endlage bewegen. Auf diese Art kann es beispielswiese möglich sein zu verhindern, dass ein Geschirrteil das sich auf der Zuführrampe in Richtung Wenderad bewegt mit einem Transportfinger und/oder einem Mitnehmer, insbesondere mit zwei Transportfingern, beispielsweise mit einem Zahnpaar, des Wenderads kollidiert und womöglich nicht ordnungsgemäß erfasst würde.

Das Handhabungsmodul kann weiterhin mindestens eine Geschirrteilbremse auf der Beschickungsrampe aufweisen. Insbesondere kann die Geschirrteilbremse auf der Beschickungsrampe eingerichtet sein, um das mindestens eine Geschirrteil auf der Beschickungsrampe zumindest vorübergehend zu bremsen und/oder aufzuhalten.

Die Beschickungsrampe kann beispielsweise als eine aktive Beschickungsrampe ausgestaltet sein. Beispielsweise kann die aktive Beschickungsrampe das Geschirrteil derart von dem Wenderad zu der Transportvorrichtung der Transportspülmaschine überführen, indem sich die Beschickungsrampe ganz oder teilweise mit dem Geschirrteil bewegt, insbesondere durch mitlaufende Elemente auf denen das Geschirrteil transportiert werden kann, beispielsweise durch mindestens ein Transportband. So können beispielsweise in der Beschickungsrampe zwei parallel laufende Rundriemen eingesetzt werden, um das Geschirrteil von dem Wenderad zu der Transportvorrichtung der Transportspülmaschine überführen, wobei das von dem Wenderad gewendete Geschirrteil auf den zwei Rundriemen abgelegt und so zur Transportvorrichtung, insbesondere zur Spülmaschine, weiter transportiert werden kann. Insbesondere kann die Beschickungsrampe beispielsweise auch ein Band und/oder Riemen, insbesondere zwei beabstandete Riemen, umfassen. Alternativ oder zusätzlich kann die Beschickungsrampe auch eine Bremseinrichtung aufweisen.

Insbesondere kann die Beschickungsrampe, beispielsweise die aktive Beschickungsrampe, mindestens einen angetriebenen Teil aufweisen. Dabei kann der angetriebene Teil beispielsweise ausgewählt sein aus der Gruppe bestehend aus einem Band, insbesondere einem Transportband, beispielsweise ein genopptes Transportband, Transportrollen, einer Gliederkette. Beispielsweise kann die Beschickungsrampe mit dem mindestens einen angetriebenen Teil geeignet sein das Geschirrteil nach oben, vorzugsweise auf eine vorbestimmte Höhe fördern. So kann die Beschickungsrampe eingerichtet sein, um das Geschirrteil zunächst nach oben, insbesondere entgegen der Schwerkraft, zu fördern, wobei das Geschirrteil zum Beispiel, wenn es an einem obersten Punkt angelangt ist, umkippen und auf eine abwärts geneigte Rutsche gelangen kann. Über die abwärts geneigte Rutsche kann das Geschirrteil beispielsweise dann der Transportvorrichtung der Transportspülmaschine zugeführt werden. Zum Beispiel kann das Geschirrteil über die abwärts geneigte Rutsche in die Transportvorrichtungen, beispielsweise in ein für das Geschirrteil vorgesehene Fach eines Transportbandes der Transportvorrichtung der Spülmaschine, gleiten und/oder rutschen.

Beispielsweise können weitere konstruktive Maßnahmen vorgesehen sein. Insbesondere können, um beispielsweise unterschiedliche Bauhöhen und/oder Höhenverhältnisse auszugleichen, zum Beispiel zwischen einzelnen Bestandteilen des Handhabungsmoduls verschiedene Erhöhungen und/oder Rampen angebracht sein, insbesondere zwischen der Zuführrampe und der Beschickungsrampe, beispielsweise zwischen aus einem Speiseraum führenden Zuführband und der Transportvorrichtung der Transport Spülmaschine.

Mindestens ein Bewegungsablauf innerhalb des Handhabungsmoduls kann beispielsweise mit der Transportvorrichtung der Transportspülmaschine synchronisierbar sein. So kann insbesondere ein Funktionsablauf im Handhabungsmodul, zum Beispiel die Drehbewegung des Wenderads mit der Bewegung der Transportvorrichtung der Transportspülmaschine synchronisiert sein. Dies kann beispielsweise durch eine Kopplung erfolgen, welche insbesondere ebenfalls von dem Handhabungsmodul umfasst sein kann. Insbesondere kann die Kopplung eingerichtet sein für das Synchronisieren des mindestens einen Bewegungsablaufs innerhalb des Handhabungsmoduls mit der Transportvorrichtung der Transportspülmaschine. Die Kopplung kann beispielsweise ausgewählt sein aus der Gruppe bestehend aus einer mechanischen Kopplung, insbesondere einer direkten mechanischen Kopplung, einer elektronischen Kopplung, beispielsweise eine elektronische Kopplung von Antriebsmotoren, z.B. unter Einsatz mindesten eines Sensors. Auch andere Kopplungsarten sind denkbar.

Beispielsweise kann die Kopplung mindestens einen Sensor aufweisen. So kann insbesondere der synchronisierte Bewegungsablauf unter Einsatz mindestens eines Sensors realisiert werden. Der Sensor kann beispielsweise ein elektronischer Sensor, insbesondere ein Lichtaster, sein. Alternativ oder zusätzlich ist auch der Einsatz von mechanischen Sensoren denkbar.

Insbesondere kann es notwendig sein, dass die Bewegung der Geschirrteile relativ zu einem Bewegungsablauf der Transportvorrichtung der Transportspülmaschine, insbesondere in Relation zum Transport der Spülmaschine, synchronisiert werden, beispielsweise, um die Geschirrteile in dafür vorgesehenen Fächern der Transportvorrichtung zu platzieren, insbesondere in fest vorgesehene Fächer eines Transportbandes einzutakten. Hierfür kann beispielsweise in vorteilhafter Weise der oben beschriebene Sensor, insbesondere der mindestens eine Sensor der Kopplung, verwendet werden. So kann der Sensor beispielsweise eingerichtet sein, um eine Position eines Geschirrteils zu erkennen. Insbesondere kann das Handhabungstool eingerichtet sein, um, falls die Position von einer vorgegebenen Position abweicht, beispielsweise wenn die Position des Geschirrteils falsch ist, das Handhabungsmodul eingerichtet sein, mindestens eine Bewegung, beispielsweise eine Bewegung des Antriebs, ganz oder teilweise zumindest vorübergehend zu stoppen, insbesondere anzuhalten. Eine Geschirraufgabe an der Zuführrampe kann dabei trotzdem möglich sein, so dass beispielsweise ein Benutzer und/oder Bediener, insbesondere eine Bedienperson, an dieser Stelle nicht behindert würde.

Insbesondere kann die Bewegung der Transportvorrichtung der Transportspülmaschine, beispielsweise vorgegeben durch einen Antrieb der Transportvorrichtung, eine Führungsgröße sein. So können insbesondere die Bewegungen, beispielsweise die Bewegungsabläufe, innerhalb des Handhabungsmoduls entsprechend der Bewegung der Transportvorrichtung angepasst sein.

Weiterhin kann das Handhabungsmodul beispielsweise mindestens ein Getriebe umfassen. Das Getriebe kann insbesondere eingerichtet sein, um den mindestens einen Bewegungsablauf innerhalb des Handhabungsmoduls zu erzeugen und/oder zu steuern. Das Getriebe zur Erzeugung und/oder Steuerung der Bewegungsabläufe kann beispielsweise seitlich an dem Handhabungsmodul angeordnet sein, insbesondere seitlich neben einem Nutzraum und/oder Schacht des Handhabungsmoduls, vorzugsweise parallel zu einer Bewegungsrichtung des mindestens einen Geschirrteils. Bevorzugt können zu dem Getriebe gehörige Bauteile, wie beispielsweise Zahnräder, Mitnehmer, Riemen und Sensoren, innerhalb des Schachts, beispielsweise angeordnet unterhalb der Zuführrampe, angeordnet sein. Auf diese Weise kann beispielsweise eine kompakte Bauweise des Handhabungsmoduls ermöglicht sein. Insbesondere könnte das Handhabungsmodul auf diese Weise ein optimiertes Verhältnis von äußerer Breite und Nutzbreite, insbesondere einer inneren Fläche zur Nutzung für das Geschirrteil, erreichen. Das Getriebe kann beispielsweise als Teil des Antriebs ausgestaltet sein.

Der Antrieb, beispielsweise der Antrieb des Wenderads, kann insbesondere eingerichtet sein den mindestens einen Bewegungsablauf innerhalb des Handhabungsmoduls anzutreiben. Beispielsweise kann eine Bewegung des Antriebs mittels eines Drehgebers überwacht werden. Insbesondere kann also das Handhabungsmodul einen Antrieb mit mindestens einem Drehgeber zur Überwachung der Bewegung des Antriebs, insbesondere zur Überwachung der Bewegungsabläufe innerhalb des Handhabungsmoduls, aufweisen. Weiterhin kann das Handhabungsmodul mindestens eine Absicherung gegen Überlast umfassen, insbesondere eine dem Antrieb zugeordnete Absicherung gegen Überlast, beispielsweise eine Überlastabsicherung mittels einer Stromüberwachung und/oder einer Maximalstrombegrenzung. Alternativ oder zusätzlich kann der Antrieb, insbesondere der dem Wenderad zugeordnete Antrieb des Handhabungsmoduls, so ausgelegt sein, dass eine vorgegebene maximale Kraft nicht überschritten werden kann.

Zum Beispiel kann der Antrieb, insbesondere der dem Wenderad zugeordnete Antrieb des Handhabungsmoduls, eingerichtet sein, um bei einer eventuell aufkommenden Verklemmung und/oder Stauung leicht lösbar zu sein. So ist es insbesondere möglich, dass der Antrieb eingerichtet ist, um ein automatisiertes Lösen, beispielsweise durch eine automatisierte Umkehrung einer Drehrichtung, zu ermöglichen. Insbesondere kann der Antrieb dabei beispielsweise nicht selbst hemmend ausgelegt sein. Beispielsweise kann es auch möglich sein, dass der Antrieb derart ausgelegt ist, dass bei einer eventuell aufkommenden Verklemmung und/oder Stauung eine Umkehrung der Drehrichtung von Hand möglich ist, beispielsweise durch einen Bediener und/oder Benutzer. So können Verklemmungen und/oder Stauungen, beispielsweise ausgelöst durch Verschmutzungen und/oder verklemmte Geschirrteile, insbesondere mittels des nicht selbst hemmend ausgelegten Antriebs in vorteilhafter Weise leicht zu lösen sein.

Das Handhabungsmodul kann weiterhin mindestens eine Abstreifeinrichtung zum Abwischen des Geschirrteils aufweisen. Insbesondere kann die Abstreifeinrichtung mindestens eine angetriebene Welle aufweisen. Weiterhin kann die Abstreifeinrichtung beispielsweise mindestens ein zumindest teilweise flexibel ausgestaltetes und an der Welle befestigtes Wischelement umfassen, wobei das Wischelement insbesondere eingerichtet sein kann, um das Geschirrteil zu berühren. Insbesondere kann das Wischelement beispielsweise zumindest teilweise flexible leistenartige Elemente aufweisen. Das Wischelement, beispielsweise auch als Wischer bezeichnet, kann insbesondere mindestens ein flexibles Material aufweisen. So kann das Wischelement ganz oder teilweise aus dem flexiblen Material, beispielsweise aus einem flexiblen Kunststoff, gefertigt sein.

Vorzugsweise kann die Abstreifeinrichtung mindestens drei Wischelemente umfassen. Insbesondere kann die Abstreifeinrichtung genau drei Wischelemente aufweisen. So kann das Geschirrteil von drei an der angetriebenen Welle befestigten Wischelementen, insbesondere nacheinander, beispielsweise in einer aufeinanderfolgenden Reihenfolge, berührt werden.

Die Welle, insbesondere die angetriebene Welle der Abstreifeinrichtung, kann zumindest eine Rotationsachse aufweisen. Beispielsweise kann die Rotationsachse der Welle im Wesentlichen orthogonal zu einer Bewegungsrichtung des Geschirrteils angeordnet sein, beispielsweise zu einer Transportrichtung des Geschirrteils.

Insbesondere können die an der angetriebenen Welle befestigten Wischelemente beispielsweise symmetrisch über den Wellenumfang verteilt an der Welle befestigt sein. Beispielsweise kann die Welle derart angetrieben sein, dass eine Bewegung des mindestens einen Wischelements mit der Bewegung des Geschirrteils synchronisiert ist, insbesondere mit mindestens einem Bewegungsablauf des Geschirrteils innerhalb des Handhabungsmoduls. Alternativ oder zusätzlich kann die Welle derart angetrieben sein, dass das mindestens eine Wischelement eine Bewegung in Richtung der Bewegung des Geschirrteils oder entgegen der Bewegung des Geschirrteils ausführt. Insbesondere kann die Welle derart angetrieben sein, dass das mindestens eine Wischelement bei einer Rotationsbewegung der Welle entweder mit oder entgegen der Bewegung des Geschirrteils bewegt wird.

Insbesondere kann die mindestens eine Abstreifeinrichtung zum Abwischen des Geschirrteils beispielsweise derart angeordnet sein, dass ausschließlich gewendete Geschirrteile abgewischt werden. Beispielsweise kann die Abstreifeinrichtung zum Abwischen des Geschirrteils, beispielsweise zum Abwischen ausschließlich gewendeter Geschirrteile, unterhalb der Beschickungsrampe angeordnet sein. So kann die Abstreifeinrichtung beispielsweise unterhalb der Beschickungsrampe, insbesondere an einem Abtransport nach dem Wenden des Geschirrteils, angeordnet sein, insbesondere sich befinden.

Insbesondere können Verunreinigungen, beispielsweise Speisereste, die sich nach einem Abwischen des Geschirrteils durch die mindestens eine Abstreifeinrichtung noch an dem Geschirrteil befinden, vorzugsweise mit einem Fluid, beispielsweise mit Luft und/oder Wasser, abgespült werden, beispielsweise durch Beaufschlagung des Geschirrteils mit dem Fluid, zum Beispiel mittels einer Düse.

In einem weiteren Aspekt der vorliegenden Erfindung wird ein Reinigungssystem zur Reinigung von Reinigungsgut vorgeschlagen. Der Begriff "Reinigungssystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein System im Sinne der obigen Definition beziehen, welches zur Reinigung von Reinigungsgut dient. Entsprechend ist der Begriff "Reinigen", wie er hier verwendet wird, ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen, bei welchem Reinigungsgut von anhaftenden makroskopischen oder auch mikroskopischen Verunreinigungen befreit wird oder derartige Verunreinigungen zumindest teilweise beseitigt werden. Zusätzlich kann optional eine Desinfektionswirkung ausgeübt werden.

Das Reinigungssystem umfasst:
a. mindestens ein Handhabungsmodul gemäß der vorliegenden Erfindung, beispielsweise gemäß einer oder mehreren der oben beschriebenen Ausgestaltungen und/oder gemäß einer oder mehreren der nachfolgend noch näher beschriebenen Ausgestaltungen;
b. mindestens eine Transportspülmaschine, wobei die Transportspülmaschine mindestens eine Reinigungskammer und mindestens eine Transportvorrichtung zum Transport von Reinigungsgut, insbesondere von einem oder mehreren Geschirrteilen, von einem Einlauf der Reinigungskammer durch die Reinigungskammer hindurch zu einem Auslauf der Reinigungskammer aufweist, wobei die Transportspülmaschine eingerichtet ist, um das Reinigungsgut, insbesondere das eine oder die mehreren Geschirrteile, in der Reinigungskammer mit mindestens einem Reinigungsfluid zu beaufschlagen; und
c. mindestens ein Transportsystem zum Anliefern von verschmutztem Reinigungsgut, insbesondere von dem einen oder den mehreren Geschirrteilen.

Das Handhabungsmodul ist dabei eingerichtet, um von dem Transportsystem angelieferte Geschirrteile an die Transportvorrichtung der Transportspülmaschine zu übergeben.

Der Begriff "Reinigungskammer", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine vollständig oder teilweise geschlossene Kammer beziehen, innerhalb derer der Reinigungsvorgang vollständig oder teilweise durchgeführt werden kann. Die Reinigungskammer kann insbesondere mindestens ein Gehäuse aufweisen, welches die Reinigungskammer ganz oder teilweise umschließt. Dabei kann eine einzige Reinigungskammer vorgesehen sein, oder es können grundsätzlich auch mehrere Reinigungskammern, beispielsweise sequentiell, vorgesehen sein. Die Reinigungskammer kann beispielsweise mindestens eine Öffnung zum Beladen der Reinigungskammer mit dem Reinigungsgut aufweisen, welche auch als Einlauf bezeichnet werden kann. Beispielsweise kann dies eine Öffnung mit einer an eine Frontseite der Reinigungskammer und/oder eine Oberseite der Reinigungskammer angeordneten Klappe sein. Alternativ sind auch Hauben zum Abschluss der Reinigungskammer möglich, beispielsweise im Rahmen von sogenannten Hauben-Geschirrspülmaschinen. Wiederum alternativ kann die Reinigungskammer auch beispielsweise ganz oder teilweise als Tunnel ausgestaltet sein, beispielsweise im Rahmen sogenannter Durchlaufgeschirrspülmaschinen oder Transportspülmaschinen, beispielsweise als Tunnel mit einer Einlauföffnung und einer Auslauföffnung, auch als Auslauf bezeichnet. Auch andere Ausgestaltungen sind grundsätzlich möglich. Dementsprechend können sich die Begriffe "Einlauf" und "Auslauf" auf Bereiche der Transportspülmaschine und/oder der Transportvorrichtung der Transportspülmaschine beziehen, in denen das Reinigungsgut in die Reinigungskammer eintritt bzw. aus der Reinigungskammer austritt. In diesen Bereichen kann beispielsweise die Transportvorrichtung über die Reinigungskammer hinausragen und frei zugänglich sein.

Die Transportspülmaschine ist eingerichtet, um das Reinigungsgut in der Reinigungskammer mit mindestens einem Reinigungsfluid zu beaufschlagen. Zu diesem Zweck kann die Transportspülmaschine insbesondere mindestens eine Beaufschlagungsvorrichtung aufweisen, insbesondere innerhalb der Reinigungskammer. Der Begriff "Beaufschlagungsvorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine grundsätzlich beliebige Vorrichtung beziehen, mittels derer das Reinigungsgut innerhalb der Reinigungskammer mit dem Reinigungsfluid, beispielsweise mit der Reinigungsflüssigkeit, beaufschlagt werden kann. Die Beaufschlagungsvorrichtung kann insbesondere mindestens ein Düsensystem umfassen. Weiterhin kann die Beaufschlagungsvorrichtung mindestens eine Pumpe umfassen, sowie mindestens ein Leitungssystem, zur Bereitstellung von Reinigungsfluid, insbesondere Reinigungsflüssigkeit, an das Düsensystem. Dabei können beispielsweise ein Düsensystem und ein Leitungssystem zur Beaufschlagung mit Reinigungsfluid aus einem Tank vorgesehen sein, sowie mindestens eine entsprechende Pumpe. Alternativ oder zusätzlich kann auch beispielsweise mindestens ein Düsensystem direkt aus einer Zuleitung beaufschlagt werden, ohne dass hierfür eine Pumpe erforderlich wäre. In der Reinigungsvorrichtung können eine oder mehrere Reinigungszonen vorgesehen sein, welche beispielsweise von dem Reinigungsgut sequenziell durchlaufen werden. So kann beispielsweise eine einzige Reinigungszone vorgesehen sein, wobei die Reinigungsvorrichtung eingerichtet ist, um mittels der Beaufschlagungsvorrichtung ein Reinigungsprogramm durchzuführen, bei welchem das Reinigungsgut stationär in der Reinigungskammer aufgenommen ist und nacheinander in einem oder mehreren Reinigungsschritten des Reinigungsprogramms auf unterschiedliche Weise mit Reinigungsfluid beaufschlagt wird. Alternativ kann das Reinigungsgut auch nacheinander durch mehrere Reinigungszonen transportiert werden, in welchen eine unterschiedliche Art der Beaufschlagung mit Reinigungsfluid erfolgt, beispielsweise eine oder mehrere Reinigungszonen ausgewählt aus der Gruppe bestehend aus: einer Vorabräumzone; einer Waschzone; einer Nachspül- oder Klarspülzone, wobei selbige nochmals unterteilt sein kann in eine Pumpenklarspülzone und eine nachgelagerte Frischwasserklarspülzone. Weiterhin kann mindestens ein Trocknungsschritt vorgesehen sein, welcher beispielsweise in der einen Kammer bei stationärer Aufnahme des Reinigungsguts der Beaufschlagung mit der Reinigungsfluid nachgelagert sein kann oder welcher beispielsweise bei der Transportspülmaschine in einer den Flüssigkeits-Reinigungszonen nachgelagerten Trocknungszone erfolgen kann.

Der Begriff "Reinigungsfluid", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Flüssigkeit beziehen, welche, bei Auftreffen auf das Reinigungsgut, eine Reinigungswirkung entfalten kann. Das Reinigungsfluid kann beispielsweise auch als Reinigungsflüssigkeit bezeichnet werden. Insbesondere kann das Reinigungsfluid eine wässrige Flüssigkeit umfassen, beispielsweise Wasser und/oder Wasser mit einem oder mehreren Zusatzstoffen, beispielsweise mit einem oder mehreren Reinigerkonzentraten und/oder Klarspülern und/oder Desinfektionsmitteln. Die Reinigungsvorrichtung kann eingerichtet sein, um eine einzelne Reinigungsflüssigkeit zu verwenden oder auch um eine Kombination mehrerer Reinigungsflüssigkeiten einzusetzen. Sind mehrere Reinigungsflüssigkeiten vorgesehen, so kann die Beaufschlagung des Reinigungsguts mit den unterschiedlichen Reinigungsflüssigkeiten gleichzeitig oder auch sequentiell erfolgen. So kann das Reinigungsgut beispielsweise stationär innerhalb der Reinigungskammer verbleiben und nacheinander mit den verschiedenen Reinigungsflüssigkeiten und/oder Reinigungsfluiden beaufschlagt werden. Alternativ kann das Reinigungsgut, wie oben ausgeführt, auch sequenziell durch mehrere Reinigungszonen transportiert werden, in denen beispielsweise eine Beaufschlagung mit unterschiedlichen Arten von Reinigungsflüssigkeit und/oder mit Reinigungsflüssigkeiten unterschiedlicher Reinheitsgrade erfolgt. Unterschiedliche Reinheitsgrade können beispielsweise durch einen Kaskadenüberlauf zwischen verschiedenen Tanks der Reinigungsvorrichtung erzeugt werden, wobei vorzugsweise ein Reinheitsgrad in Transportrichtung zunimmt.

Der Begriff "Transportsystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein grundsätzlich beliebiges System beziehen, welches eingerichtet ist, um verschmutztes Reinigungsgut anzuliefern. Dabei kann es sich um ein kontinuierliches oder auch ein diskontinuierliches System handeln. Insbesondere kann es sich um ein automatisches System handeln, bei welchem automatisch Reinigungsgut angeliefert wird. Insbesondere kann das Transportsystem mindestens ein Element aufweisen, ausgewählt aus der Gruppe bestehend aus: einem Transportband; Transportrollen, insbesondere angetriebenen Transportrollen; einer Gliederkette.

Der Begriff "anliefern", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen, bei welchem zu reinigendes Reinigungsgut manuell oder automatisch an die Transportvorrichtung und/oder die Transportspülmaschine und/oder das Transportsystem bereitgestellt wird. Der Vorgang kann beispielsweise dadurch erfolgen, dass mittels eines Transportbandes oder einer anderen Zuführvorrichtung automatisch Reinigungsgut an die Transportvorrichtung und/oder die Transportspülmaschine angeliefert wird. Alternativ kann jedoch auch eine manuelle Anlieferung erfolgen.

Da es sich bei dem Handhabungsmodul um das Handhabungsmodul gemäß der vorliegenden Erfindung, beispielsweise gemäß einer oder mehreren der oben beschriebenen Ausgestaltungen und/oder gemäß einer oder mehreren der nachfolgend noch näher beschriebenen Ausgestaltungen, handelt, wird in Bezug auf weitere Definitionen auf die Ausführungen zu dem Handhabungsmodul verwiesen.

Die Transportvorrichtung der Transportspülmaschine kann insbesondere eine Mehrzahl von Transportfächern aufweisen. Die Beschickungsrampe des Handhabungsmoduls kann dabei beispielsweise eingerichtet sein, um das Geschirrteil in mindestens eines der Transportfächer zu übergeben. Die Transportfächer der Transportspülmaschine können dabei beispielsweise zumindest teilweise in die Beschickungsrampe eingreifen. Die Transportfächer können weiterhin zumindest teilweise durch Transportfinger gebildet sein, wobei die Beschickungsrampe beispielsweise Öffnungen, insbesondere Schlitze, zum Eingriff der Transportfinger aufweisen kann.

Das Wenderad kann beispielsweise unterhalb des Transportsystems der Transportspülmaschine angeordnet sein. So kann beispielsweise die Achse des Wenderads in einer Position angeordnet sein, welche in einer vertikalen Richtung weiter unten angeordnet ist als das Transportsystem der Transportspülmaschine. Alternativ, kann das das Wenderad beispielsweise oberhalb des Transportsystems der Transportspülmaschine angeordnet sein. Auch eine Anordnung des Wenderads in einer Ebene mit dem Transportsystem der Transportspülmaschine ist denkbar.

Die Transportvorrichtung kann insbesondere ausgewählt sein aus der Gruppe bestehend aus: einem Transportband; Transportrollen, insbesondere angetriebenen Transportrollen; einer Gliederkette.

Die Transportvorrichtung der Transportspülmaschine kann beispielsweise eine Mehrzahl von Transportfingern aufweisen. Die Beschickungsrampe des Handhabungsmoduls kann dabei beispielsweise eingerichtet sein, um das Geschirrteil von dem Wenderad an die Transportfinger, insbesondere an die Transportfinger der Transportvorrichtung, zu übergeben. Die Übergabe kann insbesondere an einer Umlenkrolle der Transportvorrichtung erfolgen. Auf diese Weise kann beispielsweise das Geschirrteil mit der Benutzungsseite nach unten von den Transportfingern aufgenommen werden und von der Transportvorrichtung zumindest teilweise aufgerichtet werden.

Die Transportrichtung des Transportsystems zum Anliefern des verschmutzten Reinigungsguts kann beispielsweise quer zu einer Transportrichtung der Zuführrampe verlaufen. Auf diese Weise kann beispielsweise das Reinigungssystem individuell an Räumlichkeiten, beispielsweise an einen Grundriss einer Küche, angepasst werden.

Das Reinigungssystem kann weiterhin eine Zuführeinheit zur Zuführung eines Geschirrteils von dem Transportsystem an die Zuführrampe aufweisen. Beispielsweise kann die Zuführeinheit dabei mindestens einen Schieber aufweisen.

Weiterhin kann das Reinigungssystem beispielsweise eingerichtet sein, um mindestens zweimal eine räumliche Orientierung der Benutzungsseite zu ändern.

In einem weiteren Aspekt wird ein Verfahren zur Reinigung von Reinigungsgut vorgeschlagen. Das Verfahren umfasst die nachfolgend näher genannten Schritte. Diese Schritte können in der genannten Reihenfolge durchgeführt werden. Auch eine andere Reihenfolge ist jedoch grundsätzlich möglich. Weiterhin können zwei oder mehr der genannten Verfahrensschritte zeitlich überlappend oder gleichzeitig durchgeführt werden. Weiterhin können einer oder mehrere der genannten Verfahrensschritte einfach oder auch wiederholt durchgeführt werden. Das Verfahren kann über die genannten Schritte hinaus weitere Verfahrensschritte umfassen, welche nicht genannt sind.

Das Verfahren umfasst die folgenden Schritte:
i. Bereitstellen mindestens eines erfindungsgemäßen Reinigungssystems, beispielsweise gemäß einer oder mehreren der oben beschriebenen Ausgestaltungen und/oder gemäß einer oder mehreren der nachfolgend noch näher beschriebenen Ausgestaltungen;
ii. Anliefern von Reinigungsgut mittels des Transportsystems, wobei das Reinigungsgut mindestens ein Geschirrteil umfasst;
iii. Zuführen des Geschirrteils zu dem Wenderad des Handhabungsmoduls mittels der Zuführrampe;
iv. Aufnahme des über die Zuführrampe zugeführten Geschirrteils in der Orientierung mit der Benutzungsseite nach oben gerichtet in dem Geschirrteilfach das Wenderads;
v. Wenden des Geschirrteils mittels des Wenderads;
vi. Aufsetzen des Geschirrteils mittels des Wenderads mit der Benutzungsseite nach unten gerichtet auf die Beschickungsrampe, wobei bei dem Aufsetzen auf der Benutzungsseite auf dem Geschirrteil aufgenommene Abfälle aufgrund ihrer Schwerkraft durch die Entsorgungsöffnung der Beschickungsrampe entsorgt werden; und
vii. Überführen des Geschirrteils mittels der Beschickungsrampe von dem Wenderad zu der Transportvorrichtung der Transportspülmaschine.

Insbesondere kann in Schritt iii. das Zuführen des Geschirrteils zu dem Wenderad des Handhabungsmoduls durch Schwerkraft erfolgen. So kann beispielsweise die Schwerkraft ein Hinuntergleiten und/oder -rutschen des Geschirrteils auf der Zuführrampe ermöglichen.

Weiterhin kann in Schritt vi. das Geschirrteil mit der Benutzungsseite nach unten gerichtet auf die Beschickungsrampe aufgeschlagen werden, so dass die Abfälle zusätzlich zu ihrer eigenen Schwerkraft eine Kraft in Richtung der Entsorgungsöffnung erfahren und von dem Geschirrteil abgeklopft werden können.

Die im Schritt vi. entfernten Abfälle können insbesondere direkt in dem Handhabungsmodul aufgenommen und dort auch weiterverarbeitet werden, beispielsweise zerkleinert werden, und/oder abtransportiert werden.

Das vorgeschlagene Handhabungsmodul zur Beladung einer Transportvorrichtung einer Transportspülmaschine, das vorgeschlagene Reinigungssystem zur Reinigung von Reinigungsgut und das vorgeschlagene Verfahren weisen gegenüber bekannten Vorrichtungen und Verfahren der genannten Art zahlreiche Vorteile auf. Insbesondere können beispielsweise Ausfallzeiten, Stauungen und/oder Leerlaufzeiten der Transportspülmaschine verringert oder sogar vollständig vermieden werden. Insbesondere eine Synchronisierung von Bewegungsabläufen innerhalb des Handhabungsmoduls mit der Transportvorrichtung der Transportspülmaschine kann geeignet sein, um Ausfallzeiten, Stauungen und Leerlaufzeiten zu mindern oder ganz zu verhindern.

Weiterhin können die vorgeschlagenen Vorrichtungen und Verfahren eine bestmögliche Ausnutzung von vorhandenem Bauraum, beispielsweise von einem vorhandenen Platz in einer Küche, ermöglichen. Insbesondere kann beispielsweise das vorgeschlagene Handhabungsmodul ein optimales Verhältnis von äußerer Breite und innerer Nutzbreite erreichen. Auf diese Weise kann beispielsweise eine bestmögliche Ausnutzung der Nutzbreite, z.B. einer Fläche auf der Transportvorrichtung der Geschirrspülmaschine, ermöglicht werden, insbesondere beim Einsatz von mehreren Handhabungsmodulen, beispielsweise nebeneinander, in dem vorgeschlagenen Reinigungssystem.

Allgemein ergibt sich für den Betreiber somit eine hohe Flexibilität bei der Gestaltung und personellen Ausstattung der Spülküche. Auch für künftige Veränderungen bietet die vorgeschlagene Ausgestaltung eine erhöhte Flexibilität im Vergleich zu herkömmlichen Lösungen, insbesondere halbautomatischen oder vollautomatischen Anlagen.

Für den Hersteller des Reinigungssystems bietet die vorgeschlagene Lösung mit dem Handhabungsmodul die Möglichkeit, mehrere gleichartige Bausteine zu entwickeln und zu produzieren, anstelle immer wieder neuer individueller Sonderanlagen. Hierdurch kann insgesamt die Wirtschaftlichkeit erhöht werden, und es lassen sich Entwicklungskosten und Herstellungskosten senken.

Durch eine Aufteilung der Prozesse kann es insbesondere weiterhin gelingen, den Personalaufwand in der Spülküche zu reduzieren und auch die Belastung für das Bedienpersonal zu verringern. So wird durch die Zerlegung der Prozesse in Einzelschritte in der Regel der Arbeitsumfang des Bedienpersonals verringert, so dass zudem im gleichen Zeitraum mehr Stücke an Reinigungsgut, beispielsweise mehr Geschirrteile, verarbeitet werden können. Zudem wird es durch die Zerlegung der Bearbeitungsschritte in kleine Teilaufgaben möglich, Roboter beim Einräumen einer Transportspülmaschine in der Gemeinschaftsverpflegung einzusetzen. Die Ausgestaltung des Handhabungsmoduls kann an den jeweiligen Stand der Technik angepasst werden, so dass beispielsweise Roboterbausteinen diejenigen Aufgaben zugeordnet werden können, welche bereits heute durch Roboter bearbeitet werden können. Mit zunehmendem Umfang der Einsetzbarkeit können Roboterbausteine dann ein größeres Aufgabenfeld erhalten, und es können weitere Handhabungsmodule mit Robotik eingesetzt werden, ohne dass ein vollständiger Umbau des Systems erforderlich wäre.

Insbesondere können die vorgeschlagenen Vorrichtungen und Verfahren geeignet sein, um runde Geschirrteile zu verarbeiten. Insbesondere kann durch eine individuell an die Geometrie der Geschirrteile anpassbare Anordnung der Transportfinger eine Verarbeitung von beliebigen Geometrien von Geschirrteilen möglich sein. So können im Gegensatz zu bekannten Vorrichtungen insbesondere universell Teller, Schalen und auch Tabletts verarbeitet werden.

Weiterhin kann durch die vorgeschlagenen Vorrichtungen eine gegenüber bekannten Vorrichtungen kompaktere Bauform ermöglicht werden. Insbesondere kann eine enge Positionierung der Wenderäder dazu führen, dass das Handhabungsmodul eine Baubreite herkömmlicher Transportspülmaschinen nicht überschreitet. Insbesondere kann beispielsweise auch eine Mehrzahl nebeneinander angeordneter vorgeschlagener Handhabungsmodule die Baubreite herkömmlicher Transportspülmaschinen, insbesondere die Baubreite herkömmlicher Transportvorrichtungen von Transportspülmaschinen, nicht überschreiten.

Weiterhin kann durch die vorgeschlagenen Vorrichtungen beispielsweise auf zusätzliche Transporteinrichtungen, wie beispielsweise Förderbänder, verzichtet werden. So kann insbesondere eine Zuführung des Reinigungsguts, z.B. der Geschirrteile, über eine Rutsche, welche z.B. entsprechend den Fingern des Wenderads Schlitze aufweist, im Gegensatz zu herkömmlichen Vorrichtungen eine vollständige und/oder unterbrechungsfreie Erfassung des Reinigungsguts von den Fingern des Wenderads ermöglichen.

Insbesondere kann der Abfall, beispielsweise die Speisereste, in der vorgeschlagenen Vorrichtung ohne die Verwendung von Wasser von der Benutzungsseite des Geschirrteils getrennt werden. Insbesondere können die hier vorgeschlagenen Vorrichtungen und Verfahren auf diese Weise beispielsweise eine ressourcenschonendere Reinigung der Geschirrteile ermöglichen. Insbesondere kann auf eine Abräumfunktion mit Wasser beispielsweise verzichtet werden.

Weiterhin können die vorgeschlagenen Vorrichtungen und Verfahren beispielsweise gegenüber herkömmlichen Vorrichtungen und Verfahren leichter sein, beispielsweise eine leichtere Bauweise aufweisen. Insbesondere können die vorgeschlagenen Vorrichtungen und Verfahren, beispielsweise durch diese leichtere Bauweise, eine umweltfreundlichere Benutzung und/oder einen geringeren Energieverbrauch aufweisen. So kann insbesondere ein geringeres Antriebsmoment notwendig sein.

Weiterhin können die vorgeschlagenen Vorrichtungen und Verfahren beispielsweise einfacher zu reinigen sein, insbesondere eine leichtere Reinigung ermöglichen, beispielsweise eine gute Reinigbarkeit aufweisen. Insbesondere kann eine leichte Reinigung beispielsweise durch die glattflächige Ausgestaltung des Wenderads ermöglicht sein.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: ein Ausführungsbeispiel eines Reinigungssystems und eines Handhabungsmoduls in einer Schnittdarstellung von der Seite;
- Figur 2: ein Ausführungsbeispiel eines Handhabungsmoduls in einer perspektivischen Ansicht;
- Figuren 3 und 4: Ausschnitte aus Ausführungsbeispielen eines Handhabungsmoduls in perspektivischen Ansichten;
- Figuren 5 bis 10: Ausführungsbeispiele eines Handhabungsmoduls in perspektivischen Ansichten;
- Figur 11: ein Flussdiagramm eines Ausführungsbeispiels eines Verfahrens zur Reinigung von Reinigungsgut;
- Figur 12: ein weiteres Ausführungsbeispiel eines Reinigungssystems und eines Handhabungsmoduls in einer Schnittdarstellung von der Seite;
- Figuren 13 bis 15: Ausschnitte aus Ausführungsbeispielen eines Handhabungsmoduls in perspektivischen Schnittdarstellungen von der Seite; und
- Figuren 16 und 17: Ausschnitte aus Ausführungsbeispielen eines Handhabungsmoduls in perspektivischen Ansichten.

### Beschreibung der Ausführungsbeispiele

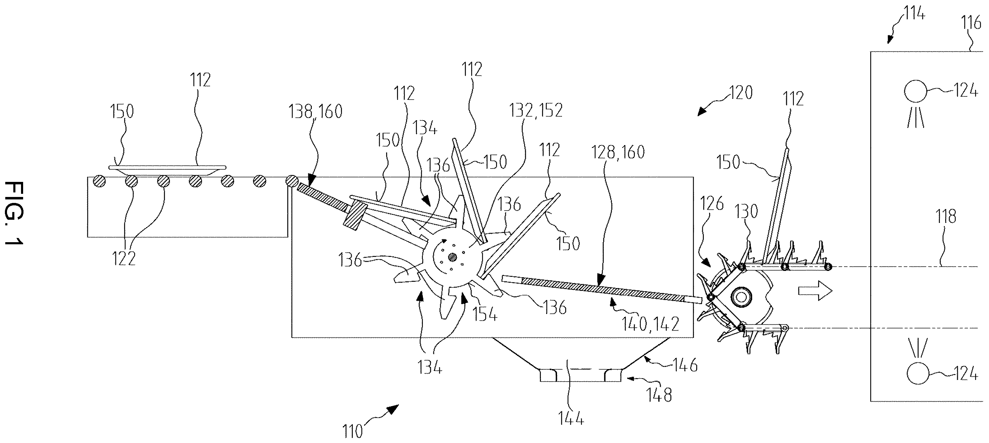

Figur 1 zeigt eine schematische Schnittdarstellung eines Ausführungsbeispiels eines Reinigungssystems 110 zur Reinigung von Reinigungsgut, insbesondere zur Reinigung von Geschirrteilen 112. Das Reinigungssystem 110 umfasst in diesem Ausführungsbeispiel exemplarisch eine Transportspülmaschine 114 mit einer Reinigungskammer 116 und einer Transportvorrichtung 118 zum Transport des Reinigungsguts 112 durch die Reinigungskammer 116 hindurch. Der in Figur 1 dargestellte Pfeil kann dabei insbesondere eine Bewegungsrichtung der Transportvorrichtung 118 anzeigen. Weiterhin umfasst das Reinigungssystem 110 in dem dargestellten Ausführungsbeispiel ein Handhabungsmodul 120 zur Beladung der Transportvorrichtung 118 der Transportspülmaschine 114 mit Reinigungsgut, insbesondere mit Geschirrteilen 112. Weiterhin umfasst das Reinigungssystem 110 ein Transportsystem 122 zum Anliefern von verschmutztem Reinigungsgut, insbesondere von verschmutzten Geschirrteilen 112.

Die Transportspülmaschine 114 umfasst eine in Figur 1 schematisch dargestellte Beaufschlagungsvorrichtung 124. Mittels der Beaufschlagungsvorrichtung 124 kann das Reinigungsgut 112, welches mittels der Transportvorrichtung 118 durch die Reinigungskammer 116, beispielsweise eine Reinigungszone, transportiert wird, mit mindestens einem Reinigungsfluid beaufschlagt werden. Beispielsweise können innerhalb der Reinigungskammer 116 der Transportspülmaschine 114 mehrere Reinigungszonen angeordnet sein, mittels derer nacheinander eine Beaufschlagung mit Reinigungsfluid erfolgen kann, beispielsweise mindestens eine Vorabräumzone, mindestens eine Waschzone und mindestens eine Klarspülzone sowie optional weiterhin mindestens eine Trocknungszone. Bezüglich möglicher Ausgestaltungen der Transportspülmaschine 114 kann grundsätzlich auf den obigen Stand der Technik verwiesen werden. Das Reinigungsgut 112 kann beispielsweise von einem Einlauf der Transportspülmaschine 114, durch die Reinigungskammer 116 hindurch, zu einem Auslauf transportiert werden.

Das Handhabungsmodul 120 ist eingerichtet, um von dem Transportsystem 122 angelieferte Geschirrteile 112 an die Transportvorrichtung 118 der Transportspülmaschine 114 zu übergeben. Wie in Figur 1 illustriert, kann die Transportvorrichtung 118 der Transportspülmaschine 114 eine Mehrzahl von Transportfächern 126, beispielsweise gebildet durch eine Mehrzahl von Transportfingern 130, aufweisen. Dabei kann insbesondere eine Beschickungsrampe 128 des Handhabungsmoduls 120 eingerichtet sein, um das Geschirrteil 112 in mindestens eines der Transportfächer 126 zu übergeben. Zur besseren Übersichtlichkeit sind in Figur 1 jeweils nur ein Transportfinger 130 und ein Transportfach 126 durch Bezugszeichen gekennzeichnet.

Das Handhabungsmodul 120 zur Beladung der Transportvorrichtung 118 der Transportspülmaschine 114 umfasst mindestens ein Wenderad 132 zum, Wenden des mindestens einen Geschirrteils 112. Das Wenderad weist dabei mindestens ein Geschirrteilfach 134 aus. Insbesondere kann das Geschirrteilfach 134 aus einer Mehrzahl von sich radial von dem Wenderad 132 erstreckenden Transportfingern 136 gebildet werden. Aus Gründen der Übersichtlichkeit, sind in den Figuren nicht alle Transportfinger 136 und Geschirrteilfächer 134 durch Bezugszeichen gekennzeichnet.

Weiterhin umfasst das Handhabungsmodul 120 mindestens eine Zuführrampe 138 zum Zuführen des mindestens einen Geschirrteils 112 zu dem Wenderad 132, beispielsweise durch Schwerkraft. Wie oben bereits ausgeführt, umfasst das Handhabungsmodul weiterhin mindestens eine Beschickungsrampe 128. Die Beschickungsrampe 128 ist dabei eingerichtet zum Überführen des Geschirrteils 112 von dem Wenderad 132 zu der Transportvorrichtung 118 der Transportspülmaschine 114. Die Beschickungsrampe umfasst mindestens eine Entsorgungsöffnung 140. Das Handhabungsmodul 120 kann insbesondere weiterhin mindestens eine Entsorgungsöffnung 142 aufweisen, wobei die Entsorgungsöffnung 142 des Handhabungsmoduls 120 der Entsorgungsöffnung 140 der Beschickungsrampe 128 entsprechen kann, wie beispielhaft in Figur 1 dargestellt. Insbesondere können Abfälle, beispielsweise aufgrund ihrer Schwerkraft, über die Entsorgungsöffnung 142 in mindestens eine Entsorgungsvorrichtung 144, beispielsweise zur Abfallbehandlung, entsorgt werden. Die Entsorgungsvorrichtung 144 kann dabei insbesondere auch von dem Handhabungsmodul umfasst sein. Beispielsweise kann die Entsorgungsvorrichtung einen Entsorgungsschacht 146 und einem Entsorgungsbehälter 148 aufweisen. Auch eine zusätzlich oder alternativ vorhandene Zerkleinerungseinheit (nicht dargestellt) ist denkbar.

Das Wenderad 132 ist zwischen der Zuführrampe 138 und der Beschickungsrampe 128 angeordnet und ist dabei eingerichtet, um das über die Zuführrampe 138 zugeführte Geschirrteil 112 in einer Orientierung mit einer Benutzungsseite 150 nach oben gerichtet in dem Geschirrteilfach 134 aufzunehmen. Das Wenderad 132 ist weiterhin eingerichtet, um das Geschirrteil 112 zu wenden und mit der Benutzungsseite 150 nach unten gerichtet auf die Beschickungsrampe 128 aufzusetzen, wobei bei dem Aufsetzen auf der Benutzungsseite 150 auf dem Geschirrteil 112 aufgenommene Abfälle aufgrund ihrer Schwerkraft durch die Entsorgungsöffnung 140, 142 entsorgbar sind. Insbesondere kann das Wenderad 132 das mindestens eine Geschirrteil 112 auch mit der Benutzungsseite 150 nach unten auf die Beschickungsrampe 128 aufzuschlagen, beispielsweise um zusätzlich zu der Schwerkraft eine Kraft auf die Abfälle auszuüben. Auf diese Weise können beispielsweise Abfälle von der Benutzungsseite 150 des Geschirrteils 112 gelöst werden, welche sich alleine durch Schwerkraft nicht von der Benutzungsseite 150 lösen würden.

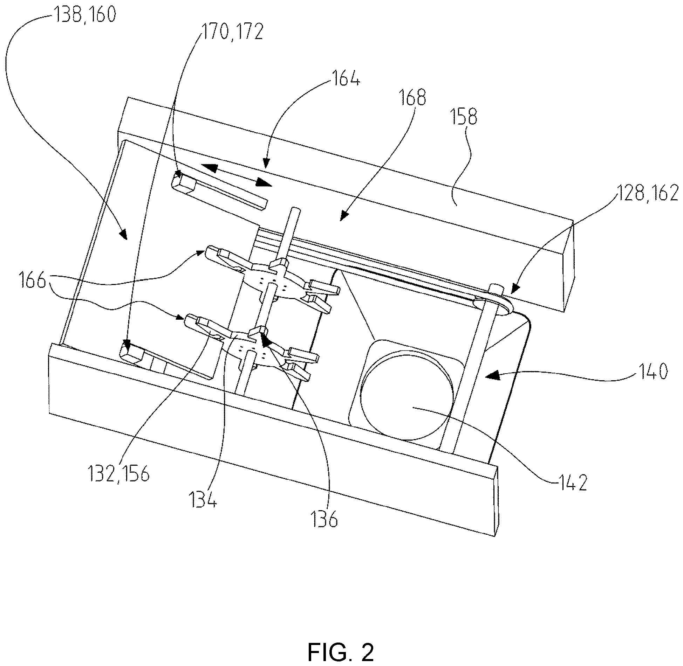

Das Wenderad 132 kann beispielsweise eine rotierbare Trommel 152 mit einer Umfangsfläche 154 umfassen, wobei sich die Transportfinger 136 radial von der Umfangsfläche 154 erstrecken können. Diese Ausführung ist beispielsweise in Figur 1 dargestellt. Wie beispielsweise in Figur 2 gezeigt, kann das Wenderad 132 insbesondere mindestens zwei Scheiben 156 umfassen von denen sich die Transportfinger 136 radial erstrecken können.

Das Wenderad 132 kann weiterhin mindestens einen Antrieb 158 umfassen. Der Antrieb 158 kann dabei eingerichtet sein, um das Wenderad 132 anzutreiben, vorzugsweise kontinuierlich anzutreiben.

Die Beschickungsrampe 128 kann, wie in Figur 1 dargestellt, zumindest teilweise als Rutsche 160 ausgestaltet sein, beispielsweise als elastische Rutsche 160. Auch die Zuführrampe 138 kann zumindest teilweise als Rutsche 160, beispielsweise als elastische Rutsche 160 ausgestaltet sein. Die Beschickungsrampe 128 kann beispielsweise auch als aktives Element ausgestaltet sein. So kann die Beschickungsrampe 128, wie beispielsweise in Figur 2 dargestellt, zwei angetriebene Riemen 162 umfassen. Die Riemen 162 können dabei insbesondere eingerichtet sein um das Geschirrteil 112 zu transportieren. Weiterhin kann die Beschickungsrampe 128 auch ganz oder teilweise elastisch ausgestaltet sein, beispielsweise um das Geschirrteil 112 abzufedern, insbesondere bei dem Aufsetzen auf der Beschickungsrampe 128 und/oder bei einem eventuellen Aufschlagen des Geschirrteils 112 auf der Beschickungsrampe 128. Beispielsweise kann eine elastische Ausgestaltung der Beschickungsrampe 128 auch eine Geräuschentwicklung abdämpfen und/oder abmildern. Auch die Zuführrampe 138 kann ganz oder teilweise elastisch ausgeführt sein.

Das Wenderad 132 kann insbesondere zumindest teilweise in die Zuführrampe 138 eingreifen. Insbesondere kann beispielsweise das Wenderad 132 zumindest teilweise, insbesondere innerhalb eines ersten Überlappungsbereichs 164, in die Zuführrampe 138 eingreifen, um eine Führung des Geschirrteils 112 in dem ersten Überlappungsbereich 164 schon aufzunehmen. Beispielsweise können insbesondere die Transportfinger 136 des Wenderads 132 in die Zuführrampe 138 eingreifen. So können die Transportfinger 136 des Wenderads 132 vorzugsweise in Schlitze 166 in der Zuführrampe 138 eingreifen, beispielsweise in extra für das Eingreifen vorgesehene Schlitze 166 in der Zuführrampe 138. Weiterhin kann das Wenderad 132 beispielsweise zumindest teilweise in die Beschickungsrampe 128 eingreifen. Insbesondere kann das Wenderad 132 zumindest teilweise in die Beschickungsrampe 128 eingreifen, um das Geschirrteil 112 in einem zweiten Überlappungsbereich 168 an die Beschickungsrampe 128 zu übergeben. Insbesondere können die Transportfinger 136 des Wenderads 132 beispielsweise in die Beschickungsrampe 128 eingreifen.

Weiterhin kann das Handhabungsmodul 120 beispielsweise mindestens eine Geschirrteilbremse 170 auf der Zuführrampe 138 aufweisen. Insbesondere kann die Geschirrteilbremse 170 eingerichtet sein, um das Geschirrteil 112 auf der Zuführrampe 138 zumindest vorübergehend zu bremsen. Insbesondere kann die Geschirrteilbremse 170 beispielsweise zwei Stopper 172 umfassen. Die Stopper 172 können beispielsweise ganz oder teilweise in dem ersten Überlappungsbereich 164 von der Zuführrampe 138 zu dem Wenderad 132 angeordnet sein. Die Stopper 172 können beispielsweise eine Bewegung parallel zu einer Bewegungsrichtung des Geschirrteils 112 ausführen. Die Bewegung der Stopper 172 ist in Figur 2 beispielhaft durch den zweiseitig gerichteten Pfeil angedeutet.

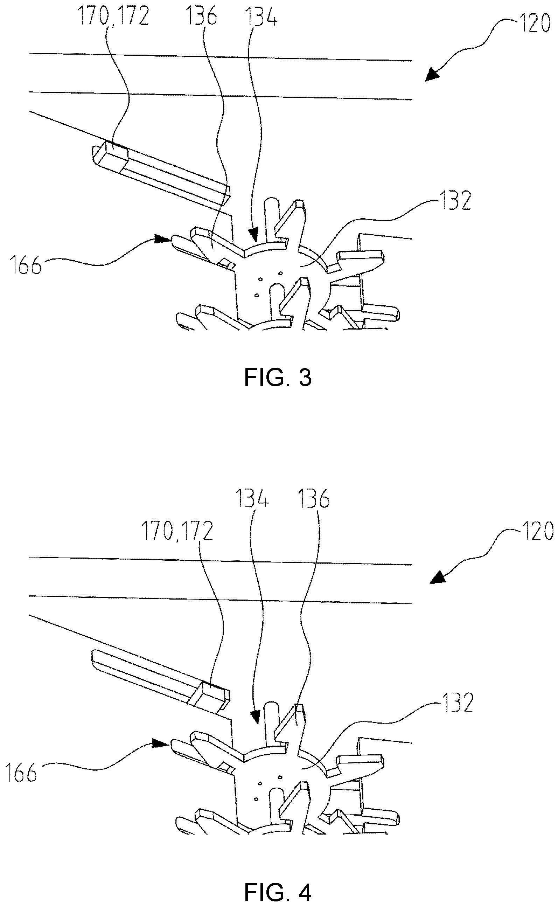

Die Bewegung der Geschirrteilbremse 170 kann zum Beispiel mit der Drehung des Wenderads 132 synchronisiert sein. Insbesondere kann die Bewegung der Geschirrteilbremse 170 synchron zu der Drehung des Wenderads 132 stattfinden. So können sich die Stopper 172 der Geschirrteilbremse 170 in einer in Figur 3 gezeigten oberen Position, insbesondere in einer oberen Endlage, befinden, wenn das Wenderad 132, insbesondere die Transportfinger 136 des Wenderads 132, einen Zugang zu dem Geschirrteilfach 134 versperren, insbesondere nicht ermöglichen. Insbesondere können die Stopper 172 der Geschirrteilbremse 170 auf diese Weise beispielsweise ein Geschirrteil 112 aufhalten und/oder bremsen, um zum Beispiel zu verhindern, dass das Geschirrteil 112 gegen das Wenderad 132 prallt, insbesondere gegen einen Transportfinger 136 des Wenderads 132, wenn das Geschirrteilfach 134 zur Zuführrampe 138 hin geschlossen ist.

In Figur 4 ist der Stopper 172 der Geschirrteilbremse 170 in einer unteren Position dargestellt. Zum Beispiel können sich die Stopper 172 der Geschirrteilbremse 170 in der unteren Position, insbesondere in einer unteren Endlage, befinden, wenn das Wenderad 132, insbesondere die Transportfinger 136 des Wenderads 132, sich in einer Position, z.B. in einer Drehposition, befindet in der das Geschirrteilfach 134 des Wenderads 132 geöffnet ist, insbesondere derart positioniert ist, dass das Geschirrteil 112 in dem Geschirrteilfach 134 des Wenderads 132 aufgenommen werden kann.

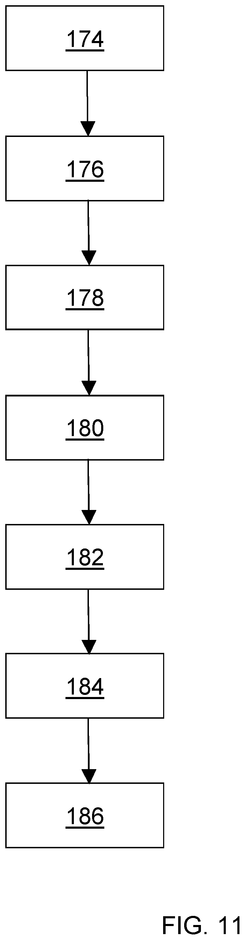

In Figur 11 ist ein Flussdiagramm eines Ausführungsbeispiels eines Verfahrens zur Reinigung von Reinigungsgut 112 gezeigt. Das Verfahren umfasst die folgenden Schritte:
i. (gekennzeichnet durch Bezugszeichen 174) Bereitstellen mindestens eines Reinigungssystems 110, insbesondere gemäß einer oder mehreren der oben beschriebenen Ausgestaltungen, beispielsweise wie in Figur 1 illustriert;
ii. (gekennzeichnet durch Bezugszeichen 176) Anliefern von Reinigungsgut 112 mittels des Transportsystems 122, wobei das Reinigungsgut 112 mindestens ein Geschirrteil 112 ist;
iii. (gekennzeichnet durch Bezugszeichen 178) Zuführen des Geschirrteils 112 zu dem Wenderad 132 des Handhabungsmoduls 120, beispielsweise durch Schwerkraft, mittels der Zuführrampe 138;
iv. (gekennzeichnet durch Bezugszeichen 180) Aufnahme des über die Zuführrampe 138 zugeführten Geschirrteils 112 in der Orientierung mit der Benutzungsseite 150 nach oben gerichtet in dem Geschirrteilfach 134 das Wenderads 132;
v. (gekennzeichnet durch Bezugszeichen 182) Wenden des Geschirrteils 112 mittels des Wenderads 132;
vi. (gekennzeichnet durch Bezugszeichen 184) Aufsetzen des Geschirrteils 112 mittels des Wenderads 132 mit der Benutzungsseite 150 nach unten gerichtet auf die Beschickungsrampe 128, wobei bei dem Aufsetzen auf der Benutzungsseite 150 auf dem Geschirrteil 112 aufgenommene Abfälle aufgrund ihrer Schwerkraft durch die Entsorgungsöffnung 140 der Beschickungsrampe 128 entsorgt werden; und
vii. (gekennzeichnet durch Bezugszeichen 186) Überführen des Geschirrteils 112 mittels der Beschickungsrampe 128 von dem Wenderad 132 zu der Transportvorrichtung 118 der Transportspülmaschine 114.

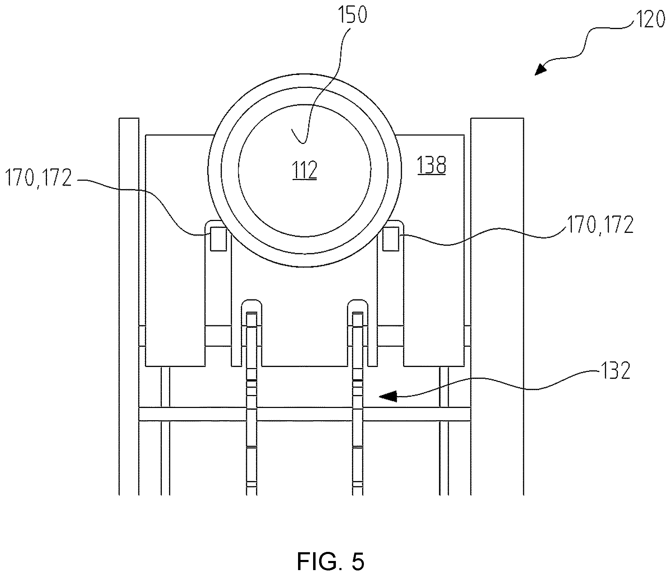

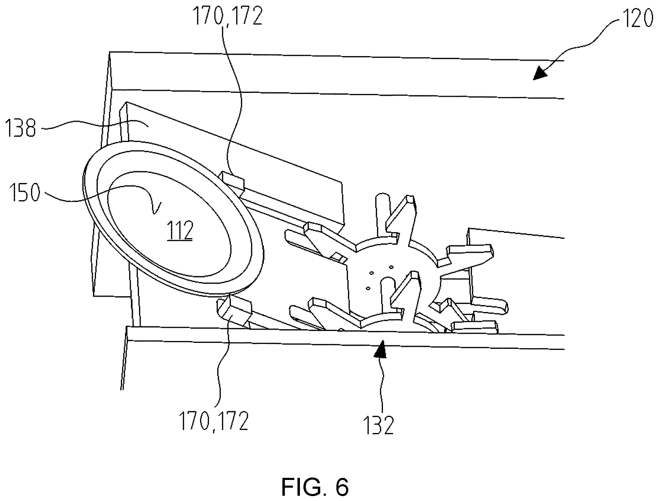

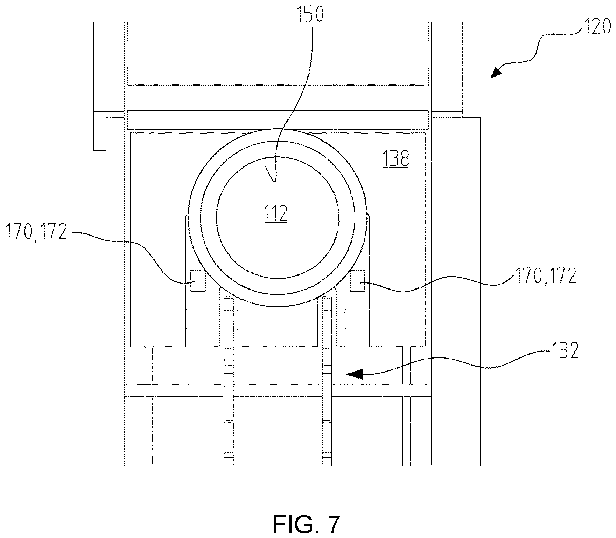

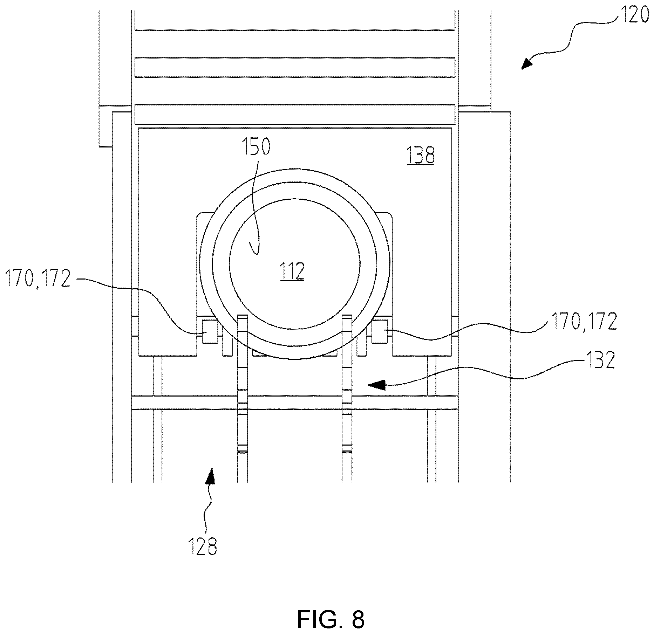

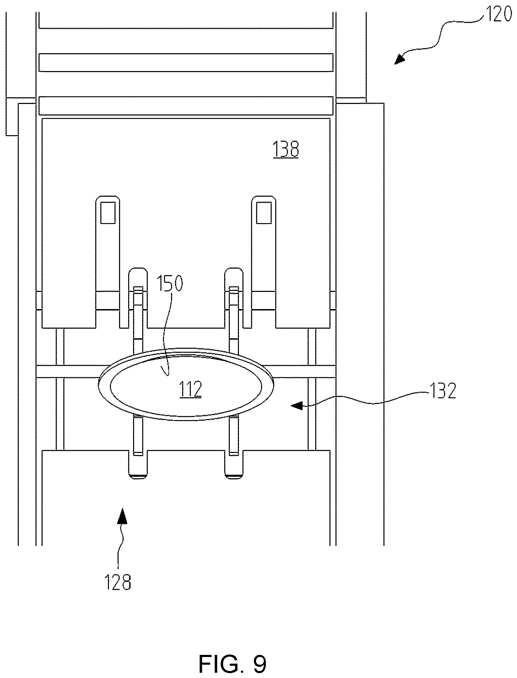

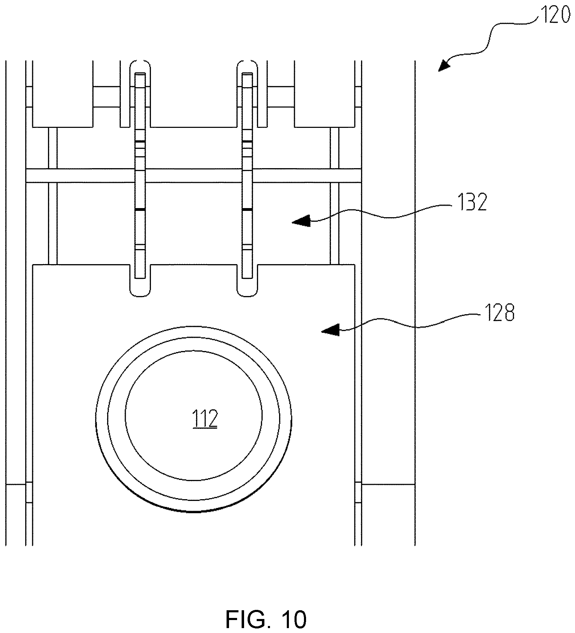

In Figuren 5 bis 10 sind Ausschnitte aus einem Ausführungsbeispiel des Handhabungsmoduls 120 bei der Durchführung des Verfahrens gezeigt. Insbesondere zeigen die Figuren 5 bis 7 beispielsweise Ausschnitte aus einem Ausführungsbeispiel des Handhabungsmoduls 120 beim Zuführen des Geschirrteils 112 zu dem Wenderad 132 des Handhabungsmoduls 120 mittels der Zuführrampe 138, insbesondere die Durchführung des Schritts iii. 178. In Figur 8 ist ein Ausschnitt aus einem Ausführungsbeispiel des Handhabungsmoduls 120 bei der Aufnahme des über die Zuführrampe 138 zugeführten Geschirrteils 112 in der Orientierung mit der Benutzungsseite 150 nach oben gerichtet in dem Geschirrteilfach 134 das Wenderads 132 illustriert, insbesondere die Durchführung des Schritts iv. 180. Figur 9 zeigt ein Ausschnitt aus einem Ausführungsbeispiel des Handhabungsmoduls 120 beim Wenden des Geschirrteils 112 mittels des Wenderads 132, insbesondere die Durchführung des Schritts v. 182. Figur 10 zeigt ein Ausschnitt aus einem Ausführungsbeispiel des Handhabungsmoduls 120 beim Aufsetzen des Geschirrteils 112 mittels des Wenderads 132 mit der Benutzungsseite 150 nach unten gerichtet auf die Beschickungsrampe 128, wobei bei dem Aufsetzen auf der Benutzungsseite 150 auf dem Geschirrteil 112 aufgenommene Abfälle aufgrund ihrer Schwerkraft durch die Entsorgungsöffnung 140 der Beschickungsrampe 128 entsorgt werden, insbesondere die Durchführung des Schritts vi. 184.

Beispielsweise kann ein Ziel der vorliegenden Erfindung eine Einsparung von Personal sein, insbesondere eine Einsparung von Personal zur Bearbeitung von Geschirrteilen 112, beispielsweise von Gedecksätzen, vor Zuführung in eine Spülmaschine, insbesondere in eine Transportspülmaschine 114. So kann beispielsweise durch eine starke Untergliederung der gesamte Bearbeitungsbereich zwischen Speiseraum und Spülmaschine sehr individuell und gleichzeitig aber auch variabel eingerichtet und betrieben werden. Insbesondere kann es denkbar sein, dass eine Zusammenstellung in Anzahl, Art und Anordnung von Handhabungsmodulen über einen Tagesablauf verändert wird. Beispielsweise je nach Anforderung, insbesondere je nach Vielzahl von unterschiedlichen Geschirrteilen, z.B. je nach Umfang des Gedecksatzes. Eine Anzahl unterschiedlicher Geschirrteile kann je nach Mahlzeit variieren. Insbesondere kann eine Anzahl der Geschirrteile von einem Frühstück oder Abendessen sich von einer Anzahl der Geschirrteile zu einem Mittagessen unterscheiden.

Insbesondere können ergänzend zu den hier beschriebenen Vorrichtungen und Verfahren einzelne bekannte Komponenten hinzugefügt werden, insbesondere weiterhin eine Verwendung finden. So kann es möglich sein, die hier beschriebenen Vorrichtungen und Verfahren beispielsweise durch einfache Schieber oder Wischer zu ergänzen. Auch Besteckabhebemagnete können beispielsweise in einem Sortiment von ergänzenden Bearbeitungswerkzeugen enthalten sein.

Dem Handhabungsmodul 120 können die Geschirrteile 112 insbesondere in einer definierten Lage, z.B. in einer normalen Gebrauchslage, insbesondere mit der Benutzungsseite 150 nach oben, zugeführt werden.

Das Handhabungsmodul 120 kann insbesondere geeignet sein, um eine oder mehrere der nachfolgenden Funktionen auszuführen:
- Wenden des Geschirrteils 112;
- Entleeren bzw. Abräumen des Geschirrteils, insbesondere Befreien des Geschirrteils 112 von Speiseresten;
- Bereitstellen des Geschirrteils 112 zur Aufnahme durch ein Transportband der Spülmaschine.

Insbesondere kann das Handhabungsmodul 120 eingerichtet sein, um das Geschirrteil 112 in korrekter Lage bzw. Position, beispielsweise mit nach oben gerichteter Benutzungsseite 150, und vorzugsweise auch zu einer gewünschten Zeit aus dem Handhabungsmodul auszugeben.

Diese Funktion des Handhabungsmoduls 120 kann beispielsweise durch eine integrierte Behandlung der Speisereste ergänzt sein. Insbesondere kann dies bedeuten, dass die Speisereste, die nach einer Benutzung auf den Geschirrteilen verblieben sind, beispielsweise nach dem Essen, im Handhabungsmodul gesammelt und oder behandelt werden und z.B. nach Ende einer Betriebszeit, nicht manuell entfernt werden müssen, sondern das Handhabungsmodul die Speisereste bei Bedarf und/oder kontinuierlich selbsttätig austrägt. Dies kann beispielsweise durch Erzeugen einer pumpfähigen Masse, insbesondere in der Entsorgungsvorrichtung 144, geschehen. Eine beispielhafte Aufnahme von Speiseresten könnte vorzugsweise ein integrierter Entsorgungsbehälter 148 sein, beispielsweise eine Abfalltonne, z.B. angeordnet in einem Inneren des Handhabungsmoduls 120. Auch andere Lösungen wie beispielsweise ein Anschluss an eine zentrale Abfallbeseitigung sind ebenfalls denkbar.

Insbesondere kann das Handhabungsmodul 120 beispielsweise für unterschiedliche Geschirrteile, insbesondere für unterschiedliches Spülgut, konfigurierbar sein. So kann das Handhabungsmodul 120, beispielsweise die Transportfinger 136 des Wenderads 132, an eine Abmessung der Geschirrteile 112 anpassbar sein, z.B. an Teller, Tassen, Schalen, Tabletts, und/oder Besteck. Auf diese Weise kann es beispielsweise möglich sein, dass Handhabungsmodule für unterschiedliche Geschirrteile sich weitgehend gleichen und nur in einzelnen wenigen Bauteilen dem jeweiligen Einsatz angepasst werden müssen. Dies führt zu Kosteneinsparung in der Entwicklung und der Herstellung der Handhabungsmodule.

Das Handhabungsmodul 120 kann beispielsweise dazu eingerichtet sein, Stückzahlen der verarbeiteten Geschirrmengen an eine Steuerung der Spülmaschine, insbesondere der Transportspülmaschine 114, weiter zu geben. So kann bei einer Verwendung einer Mehrzahl von Handhabungsmodulen 120 in einem Reinigungssystem 110, beispielswiese das jeweilige Handhabungsmodul 120 der Spülmaschine ein Signal geben, wenn kein Reinigungsgut zugeführt wird. Dies kann insbesondere auftreten, wenn die Geschirrteile 112, z.B. die Gedecksätze, nicht vollständig bestückt sind. Die Spülmaschine, insbesondere die Transportspülmaschine 114, kann beispielsweise mit einer derartigen Information eine Strategie zu Einsparung von Ressourcen einleiten.

Das Handhabungsmodul 120 kann beispielsweise eingerichtet sein, um an eine beliebige Stelle am Einlauf einer Spülmaschine, insbesondere einer Transportspülmaschine 114, angeordnet und/oder angedockt zu werden. Das Handhabungsmodul 120 kann beispielsweise derart ausgestaltet und/oder ausgeführt sein, dass es werkzeuglos von einer Position am Maschineneinlauf an eine andere Position versetzt werden kann, inklusive einer Versorgung mit Energie und/oder Steuersignalen.

Insbesondere können mehrere Handhabungsmodule 120, insbesondere Handhabungsmodule welche für unterschiedliche Geschirrteile ausgerüstet sein können, nebeneinander am Maschineneinlauf angeordnet werden. Insbesondere können die Handhabungsmodule derart ausgestaltet sein, dass eine Breite, insbesondere eine Breite welche das Geschirrteil 112 auf der Transportvorrichtung 118, z.B. auf dem Spülmaschinenband, benötigt, nicht oder nur unwesentlich überschritten wird. Insbesondere kann dadurch beispielsweise eine übliche Kapazität der Spülmaschine beibehalten werden, bzw. vorzugsweise nicht verringert werden.

Eine Anzahl von Handhabungsmodulen kann insbesondere an eine Menge der zu reinigenden Geschirrteile 112 anpassbar sein. So kann die Anzahl und die Anordnung der Handhabungsmodule 120 beispielsweise bestimmt sein durch eine Menge der zu spülenden Teile, von den Anforderungen der Spülmaschine, z.B. einer Breite, einer Art und einer Verteilung der Behandlungsspuren, einer Art der Geschirrteile, insbesondere einer Art des Spülguts, einer Verteilung der Spülgutmenge, beispielsweise über die unterschiedlichen Formen, oder Ähnlichem.

Beispielsweise kann in einer Ausführung das Transportsystem 122, beispielsweise ein Zuführband, auf dem die Geschirrteile 112, z.B. die Gedecke, von einem Speisesaal in eine Spülküche transportiert werden, quer vor dem Handhabungsmodul 120 angeordnet sein. Insbesondere kann das Transportsystem 122 beispielsweise orthogonal zu einem Einlauf der Spülmaschine verlaufen. Beispielsweise kann zwischen dem Transportsystem 122, z.B. dem Zuführband, und dem Einlauf der Spülmaschine, insbesondere der Transportspülmaschine 114, eine Mehrzahl von Handhabungsmodulen 120 angeordnet sein. Beispielsweise kann in dem Reinigungssystem 110 auch parallel zu dem Handhabungsmodul 120 eine weitere Verarbeitung stattfinden, zum Beispiel könnte das Besteck von einem Magneten von dem Transportsystem 122 abgenommen werden. Auch eine parallele Verarbeitung eines Tabletts, beispielsweise mit einem einfachen Automatisierungsbaustein, ist denkbar.

Insbesondere könnte in einer Ausführung parallel zu dem Handhabungsmodul 120 und/oder integriert in das Handhabungsmodul 120 ein Roboter angeordnet sein. Beispielsweise könnte der Roboter eingerichtet sein, um einzelne oder mehrere Geschirrteile 112, beispielsweise ein Trinkglas von einem Tablett, abzunehmen. Zusätzlich kann eine Person übrige Geschirrteile 112 von Hand abnehmen. Alternativ oder zusätzlich können die übrigen Geschirrteile 112, z.B. Besteck und Tablett, auch parallel verarbeitet werden, beispielsweise gemeinsam mit einem einfachen Automatisierungsbaustein zur Spülmaschine geführt werden.

Insbesondere kann sich zukünftig beispielsweise eine Geschirrteil-Aufgabesituation in einem Speiseraum gegenüber heute bekannten Ausführungen derart verändern, dass schon bei der Aufgabe, beispielsweise durch einen Gast, insbesondere eine Person welche in dem Speiseraum gegessen hat, die Geschirrteile 112, z.B. die Bestandteile des Gedecksatzes, einzeln aufgegeben werden. Beispielsweise kann es möglich sein, diese derart aufgegebenen Geschirrteile 112 jeweils separat zu den Handhabungsmodulen 120 zu transportieren und dort wie oben beschrieben weiter zu verarbeiten.

Insbesondere ist beispielsweise durch die vorgeschlagenen Vorrichtungen und Verfahren auch eine Aufrüstung bereits installierter Anlagen zur Reinigung von Reinigungsgut 112 denkbar. So kann es beispielsweise je nach Entwicklung der Gemeinschaftsverpflegung oder auch der Robotertechnik beispielsweise möglich sein, dass installierte Anlage aufgerüstet, nachgerüstet und/oder verändert werden.

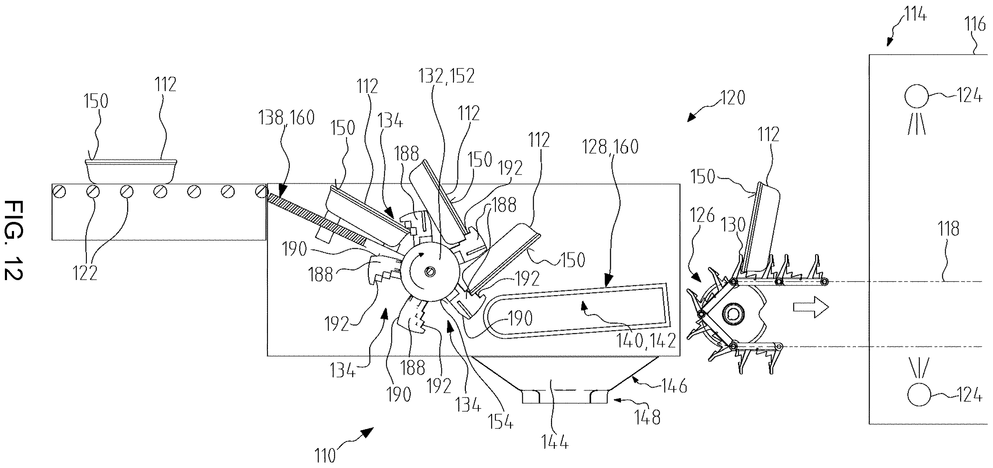

In Figur 12 ist ein weiteres Ausführungsbeispiel eines Reinigungssystems 110 zur Reinigung von Reinigungsgut, insbesondere zur Reinigung von Geschirrteilen 112, in einer Schnittdarstellung von der Seite gezeigt. Das in Figur 12 gezeigte Ausführungsbeispiel entspricht zu einem Großteil dem in Figur 1 gezeigten Ausführungsbeispiel, wobei sich Unterschiede in der Ausgestaltung der Wenderäder 132 ergeben. So weist das in Figur 12 dargestellte Wenderad 132 beispielsweise eine Mehrzahl von sich radial erstreckenden Mitnehmern 188 auf. Die Mitnehmer 188 können insbesondere das mindestens eine Geschirrteilfach 134 bilden. Beispielsweise können die Mitnehmer 188 jeweils mindestens eine Wendegeometrie 190 sowie eine Niederhaltergeometrie 192 aufweisen.

Das Reinigungssystem 110 kann zum Beispiel derart ausgelegt sein, dass Bewegungsabläufe, insbesondere Bewegungsabläufe des Handhabungsmoduls 120 mit Bewegungsabläufen der Transportspülmaschine und/oder des Transportsystems 122 aufeinander abgestimmt sind. So kann es beispielsweise möglich sein, dass das Reinigungssystem 110 derart ausgelegt ist, dass auf dem Transportsystem 122 achtzehn Geschirrteile 112 pro Minute transportiert werden können, beispielsweise entsprechend einem Abtransport von fünfzehn Tabletts aus einem Speiseraum (nicht dargestellt), und von dem Reinigungssystem 110 verarbeitet werden können. Dabei kann es beispielsweise notwendig sein die Bewegungsabläufe innerhalb des Reinigungssystems 110, beispielsweise die Bewegungsabläufe des Handhabungsmoduls 120, in ihrer Geschwindigkeit anzupassen. So kann es beispielsweise möglich sein, dass die Transportspülmaschine 114, insbesondere die Transportvorrichtung 118 der Transportspülmaschine 114, eine höhere Geschwindigkeit aufweist, als beispielsweise das Transportsystem 122, insbesondere, um beispielsweise Stauungen zu vermeiden.

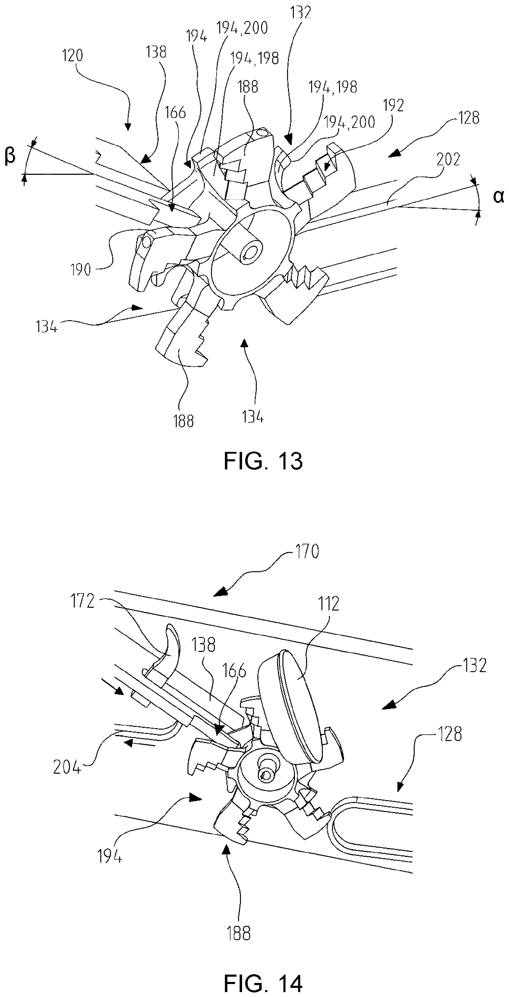

In den Figuren 13 bis 15 sind jeweils in Schnittdarstellung gezeigte Ausschnitte aus Ausführungsbeispielen eines Handhabungsmoduls 120 illustriert. Das Wenderad 132 kann beispielsweise eine Mehrzahl von Leitstrukturen 194 aufweisen. Insbesondere können die Mitnehmer 188 und die Leitstrukturen 194, vorzugsweise gemeinsam, das Geschirrteilfach 134 bilden. Beispielsweise kann die Anzahl der Geschirrteilfächer 134 des Wenderads 132 variieren. Insbesondere kann die Anzahl der Geschirrteilfächer 134 je nach Form der Geschirrteile 112 variieren und/oder an einen vorgegebenen Durchsatz, beispielsweise an einen erforderlichen Durchsatz, angepasst sein. Auch äußere Gegebenheiten wie beispielsweise eine Höhendifferenz zwischen Beschickungsrampe 128 und Zuführrampe 138 können eine Rolle spielen. So kann das Wenderad 132 beispielsweise sechs Geschirrteilfächer 134 bilden, wie beispielhaft in Figur 12 zu sehen. Beispielsweise kann das Wenderad 132, wie beispielhaft in den Figuren 13-15 gezeigt, auch fünf Geschirrteilfächer 134 bilden.

Beispielsweise können die Leitstrukturen 194 jeweils mindestens eine Leitkontur 196 aufweisen, insbesondere können die Leitstrukturen beispielsweise drei Leitkonturen 196 aufweisen. Dabei können die Leitkonturen 196 beispielsweise eine konkave Leitkontur 198 sowie beispielsweise zwei Leitkanten 200 umfassen. Insbesondere kann das Wenderad 132 symmetrisch ausgestaltet sein, sodass beispielsweise die Leitstruktur 194 eine sich über die Symmetrieebenen hinweg erstreckende konkave Leitkontur 198, sowie jeweils zwei Leitkanten 200 aufweisen kann, wobei die Leitkanten 200 beispielsweise an jeweils einem Ende der konkaven Leitkontur 198 angeordnet sein können.

Insbesondere können die Mitnehmer 188 des Wenderads 132 in die Beschickungsrampe 128 eingreifen. Die Beschickungsrampe 128 kann eine Neigung α gegenüber einer horizontalen Ebene aufweisen. Weiterhin kann die Beschickungsrampe 128 beispielsweise als aktive Beschickungsrampe 128 ausgestaltet sein und mindestens einen angetriebenen Teil aufweisen. Dieser angetriebene Teil kann beispielsweise mindestens ein Transportband 202 umfassen.

Insbesondere können die Mitnehmer 188 des Wenderads 132 in die Zuführrampe 138 eingreifen. So können die Mitnehmer 188 des Wenderads 132 vorzugsweise in Schlitze 166 in der Zuführrampe 138 eingreifen, beispielsweise in extra für das Eingreifen vorgesehene Schlitze 166 in der Zuführrampe 138. Die Zuführrampe 138 kann eine Neigung β gegenüber einer horizontalen Ebene aufweisen.

Weiterhin kann das Handhabungsmodul 120 mindestens eine Geschirrteilbremse 170 aufweisen. Die Geschirrteilbremse 170 kann beispielsweise auf der Zuführrampe 138 angeordnet sein und kann zum Beispiel zwei Stopper 172 umfassen. Jedem Stopper 172 kann dabei beispielsweise eine eigene umlaufende Transporteinrichtung 204 zugeordnet sein. So kann der Stopper 172 beispielsweise über die umlaufende Transporteinrichtung 204 angetrieben werden. Insbesondere kann die umlaufende Transporteinrichtung 204 die Bewegung des Stoppers 172 derart beeinflussen, dass der Stopper 172 ebenfalls eine umlaufende Bewegung ausführt. Beispielsweise kann der mit der umlaufenden Transporteinrichtung 204 angetriebene Stopper 172 beispielsweise eine umlaufende Bewegung ausführen, dass er sich an einer Oberseite der Zuführrampe 138 parallel zu einer Bewegungsrichtung des Geschirrteils 112 bewegt und an einer Unterseite der Zuführrampe 138 eine Bewegung entgegen der Bewegungsrichtung des Geschirrteils 112, insbesondere umlaufend, ausführt. Ein derartiger Bewegungsablauf ist in Figur 13 durch Pfeile beispielhaft illustriert.

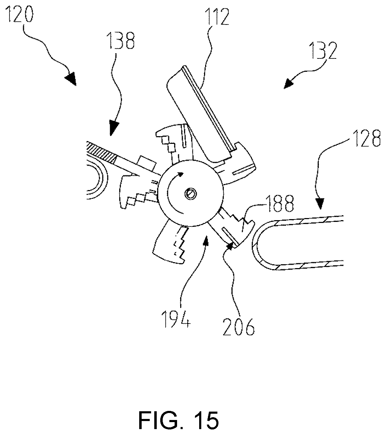

Die Mitnehmer 188 des Wenderads 132 können insbesondere reversibel befestigt sein, beispielsweise austauschbar. Beispielsweise kann eine derartige Befestigung der Mitnehmer 188 mittels Schrauben realisiert sein. Dazu können insbesondere an den Mitnehmern 188 entsprechende Bohrungen 206 und/oder Gewinde vorgesehen sein, wie beispielhaft in Figur 15 gezeigt. Auch andere Befestigungsarten sind möglich.

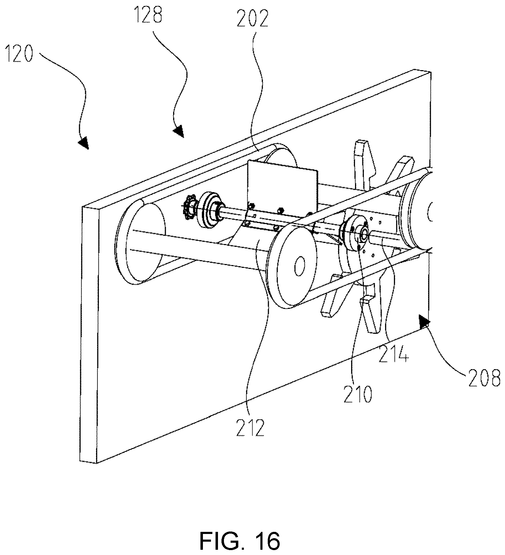

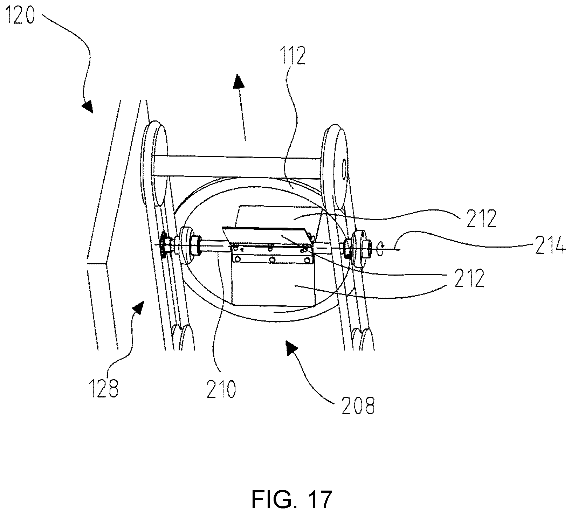

In den Figuren 16 und 17 sind Ausschnitte aus weiteren Ausführungsbeispielen eines Handhabungsmoduls 120 in perspektivischen Ansichten dargestellt. Das Handhabungsmodul 120 kann mindestens eine Abstreifeinrichtung 208 zum Abwischen des Geschirrteils 112 aufweisen. Insbesondere kann die Abstreifeinrichtung 208 beispielsweise mindestens eine angetriebene Welle 210 aufweisen. Weiterhin kann die Abstreifeinrichtung 208 beispielsweise mindestens ein zumindest teilweise flexibel ausgestaltetes und an der Welle 210 befestigtes Wischelement 212 umfassen. Das Wischelement 212 kann insbesondere eingerichtet sein, um das Geschirrteil 112 zu berühren, wie beispielhaft in Figur 17 illustriert.

Beispielsweise kann die Abstreifeinrichtung 208 unterhalb der Beschickungsrampe 128 angeordnet sein, beispielsweise in einem Bereich zwischen einer oberen Laufrichtung und einer unteren Laufrichtung des umlaufenden Transportbandes 202. So können insbesondere die an der angetriebenen Welle 210 befestigten Wischelemente 212 eine Bewegung ausführen, beispielsweise angetrieben mittels der angetriebenen Welle 210, die ein Abwischen und/oder Abstreifen von Abfall wie beispielsweise Speiseresten von einer Oberfläche des Geschirrteils 112 ermöglicht. Die Bewegung, insbesondere eine Rotationsbewegung, der Wischelemente 212 um eine Rotationsachse 214 der angetriebenen Welle 210 kann beispielsweise derart ausgeführt werden, dass die Wischelemente 212 das Geschirrteil 112 in einer Richtung abwischen, die der Bewegung des Geschirrteils 112 entgegen gerichtet ist. Diese Bewegungsrichtungen sind in Figur 17 exemplarisch durch Pfeile illustriert. Auch eine umgekehrte Bewegungsrichtung der Wischelemente 212, insbesondere in eine Rotationsbewegung in entgegengesetzter Richtung, ist möglich.

### Bezugszeichenliste

- 110: Reinigungssytem
- 112: Geschirrteil
- 114: Transportspülmaschine
- 116: Reinigungskammer
- 118: Transportvorrichtung
- 120: Handhabungsmodul
- 122: Transportsystem
- 124: Beaufschlagungsvorrichtung
- 126: Transportfach
- 128: Beschickungsrampe
- 130: Transportfinger der Transportvorrichtung
- 132: Wenderad
- 134: Geschirrteilfach
- 136: Transportfinger des Wenderads
- 138: Zuführrampe
- 140: Entsorgungsöffnung
- 142: Entsorgungsöffnung
- 144: Entsorgungsvorrichtung
- 146: Entsorgungsschacht
- 148: Entsorgungsbehälter
- 150: Benutzungsseite
- 152: Trommel
- 154: Umfangsfläche
- 156: Scheibe
- 158: Antrieb
- 160: Rutsche
- 162: Riemen
- 164: erster Überlappungsbereich
- 166: Schlitz
- 168: zweiter Überlappungsbereich
- 170: Geschirrteilbremse
- 172: Stopper
- 174: Schritt i.
- 176: Schritt ii.
- 178: Schritt iii.
- 180: Schritt iv.
- 182: Schritt v.
- 184: Schritt vi.
- 186: Schritt vii.
- 188: Mitnehmer
- 190: Wendegeometrie
- 192: Niederhaltergeometrie
- 194: Leitstrukturen
- 196: Leitkontur
- 198: konkave Leitkontur
- 200: Leitkante
- 202: Transportband
- 204: Transporteinrichtung
- 206: Bohrung
- 208: Abstreifeinrichtung
- 210: Welle
- 212: Wischelement
- 214: Rotationsachse

## Patentansprüche

1. Handhabungsmodul (120) zur Beladung einer Transportvorrichtung (118) einer Transportspülmaschine (114), umfassend:
A. mindestens ein Wenderad (132) zum Wenden mindestens eines Geschirrteils (112), wobei das Wenderad (132) mindestens ein Geschirrteilfach (134) aufweist;
B. mindestens eine Zuführrampe (138) zum Zuführen des Geschirrteils (112) zu dem Wenderad (132);
C. mindestens eine Beschickungsrampe (128) zum Überführen des Geschirrteils (112) von dem Wenderad (132) zu einer Transportvorrichtung (118) der Transportspülmaschine (114),
wobei das Wenderad (132) zwischen der Zuführrampe (138) und der Beschickungsrampe (128) angeordnet ist, wobei das Wenderad (132) eingerichtet ist, um das über die Zuführrampe (138) zugeführte Geschirrteil (112) in einer Orientierung mit einer Benutzungsseite (150) nach oben gerichtet in dem Geschirrteilfach (134) aufzunehmen, wobei das Wenderad (132) weiterhin eingerichtet ist, um das Geschirrteil (112) zu wenden und mit der Benutzungsseite (150) nach unten gerichtet auf die Beschickungsrampe (128) aufzusetzen,
**dadurch gekennzeichnet, dass**
die Beschickungsrampe (128) mindestens eine Entsorgungsöffnung (140) aufweist, wobei bei dem Aufsetzen auf der Benutzungsseite (150) auf dem Geschirrteil (112) aufgenommene Abfälle aufgrund ihrer Schwerkraft durch die Entsorgungsöffnung (140) entsorgbar sind.

2. Handhabungsmodul (120) nach dem vorhergehenden Anspruch, wobei das Wenderad (132) eingerichtet ist, um das Geschirrteil (112) mit der Benutzungsseite (150) nach unten auf die Beschickungsrampe (128) aufzuschlagen.

3. Handhabungsmodul (120) nach einem der vorhergehenden Ansprüche, wobei das Wenderad (132) eine Mehrzahl von sich radial erstreckenden Transportfingern (136) umfasst, wobei die Transportfinger (136) das mindestens eine Geschirrteilfach (134) bilden.

4. Handhabungsmodul (120) nach dem vorhergehenden Anspruch, wobei das Wenderad (132) mindestens zwei Scheiben (156) umfasst von denen sich die Transportfinger (136) radial erstrecken.

5. Handhabungsmodul (120) nach Anspruch 1 oder 2, wobei das Wenderad (132) eine Mehrzahl von Mitnehmern (188) aufweist, wobei die Mitnehmer (188) das mindestens eine Geschirrteilfach (134) bilden.

6. Handhabungsmodul (120) nach dem vorhergehenden Anspruch, wobei die Mitnehmer (188) jeweils mindestens eine Wendegeometrie (190) und mindestens eine Niederhaltergeometrie (192) aufweisen.

7. Handhabungsmodul (120) nach einem der zwei vorhergehenden Ansprüche, wobei das Wenderad (132) weiterhin eine Mehrzahl von Leitstrukturen (194) aufweist, wobei die Leitstrukturen (194) und die Mitnehmer (188) das mindestens eine Geschirrteilfach (134) bilden.

8. Handhabungsmodul (120) nach einem der vorhergehenden Ansprüche, wobei das Handhabungsmodul (120) weiterhin mindestens eine Entsorgungsöffnung (142) aufweist, wobei die Abfälle aufgrund ihrer Schwerkraft über die Entsorgungsöffnung (142) in mindestens eine Entsorgungsvorrichtung (144) entsorgbar sind, insbesondere in mindestens eine Entsorgungsvorrichtung (144) ausgewählt aus der Gruppe bestehend aus einem Entsorgungsschacht (146) und einem Entsorgungsbehälter (148); einer Zerkleinerungseinrichtung.

9. Handhabungsmodul (120) nach einem der vorhergehenden Ansprüche, wobei die Beschickungsrampe (128) elastisch ausgestaltet ist.

10. Handhabungsmodul (120) nach einem der vorhergehenden Ansprüche, wobei die Zuführrampe (138) elastisch ausgestaltet ist.

11. Handhabungsmodul (120) nach einem der vorhergehenden Ansprüche, wobei das Wenderad (132) zumindest teilweise in mindestens ein Element eingreift, ausgewählt aus der Gruppe bestehend aus der Zuführrampe (138) und der Beschickungsrampe (128).

12. Handhabungsmodul (120) nach einem der vorhergehenden Ansprüche, wobei das Handhabungsmodul (120) weiterhin mindestens eine Geschirrteilbremse (170) auf der Zuführrampe (138) aufweist, wobei die Geschirrteilbremse (170) eingerichtet ist, um das Geschirrteil (112) auf der Zuführrampe (138) vorübergehend zu bremsen, wobei die Geschirrteilbremse (170) mindestens zwei Stopper (172) umfasst, wobei die Stopper (172) jeweils als Finger ausgestaltet sind.

13. Handhabungsmodul (120) nach einem der vorhergehenden Ansprüche, wobei das Handhabungsmodul (120) weiterhin mindestens eine Geschirrteilbremse (170) auf der Beschickungsrampe (128) aufweist, wobei die Geschirrteilbremse (170) eingerichtet ist, um das Geschirrteil (112) auf der Beschickungsrampe (128) vorübergehend zu bremsen.

14. Handhabungsmodul (120) nach dem vorhergehenden Anspruch, wobei das Handhabungsmodul (120) mindestens eine Kopplung umfasst, wobei die Kopplung für das Synchronisieren des mindestens einen Bewegungsablaufs innerhalb des Handhabungsmoduls mit der Transportvorrichtung der Transportspülmaschine eingerichtet ist, wobei die Kopplung ausgewählt ist aus der Gruppe bestehend aus einer mechanischen Kopplung, insbesondere einer direkten mechanischen Kopplung, einer elektronischen Kopplung, beispielsweise eine elektronische Kopplung von Antriebsmotoren unter Einsatz mindesten eines Sensors.

15. Handhabungsmodul (120) nach einem der vorhergehenden Ansprüche, wobei das Handhabungsmodul (120) weiterhin mindestens eine Abstreifeinrichtung (208) zum Abwischen des Geschirrteils (112) aufweist, wobei die Abstreifeinrichtung (208) mindestens eine angetriebene Welle (210) aufweist, wobei die Abstreifeinrichtung (208) weiterhin mindestens ein zumindest teilweise flexibel ausgestaltetes und an der Welle (210) befestigtes Wischelement (212) umfasst, wobei das Wischelement (212) eingerichtet ist, um das Geschirrteil (112) zu berühren.

16. Reinigungssystem (110) zur Reinigung von Reinigungsgut (112), umfassend:
a. mindestens ein Handhabungsmodul (120) nach einem der vorhergehenden Ansprüche;
b. mindestens eine Transportspülmaschine (114), wobei die Transportspülmaschine (114) mindestens eine Reinigungskammer (116) und mindestens eine Transportvorrichtung (118) zum Transport von Reinigungsgut (112) von einem Einlauf der Reinigungskammer (116) durch die Reinigungskammer (116) hindurch zu einem Auslauf der Reinigungskammer (116) aufweist, wobei die Transportspülmaschine (114) eingerichtet ist, um das Reinigungsgut (112) in der Reinigungskammer (116) mit mindestens einem Reinigungsfluid zu beaufschlagen; und
c. mindestens ein Transportsystem (122) zum Anliefern von verschmutztem Reinigungsgut (112),
wobei das Handhabungsmodul (120) eingerichtet ist, um von dem Transportsystem (122) angelieferte Geschirrteile (112) an die Transportvorrichtung (118) der Transportspülmaschine (114) zu übergeben.

17. Reinigungssystem (110) nach dem vorhergehenden Anspruch, wobei die Transportvorrichtung (118) der Transportspülmaschine (114) eine Mehrzahl von Transportfächern (126) aufweist, wobei die Beschickungsrampe (128) eines Handhabungsmoduls (120) eingerichtet ist, um das Geschirrteil (112) in mindestens eines der Transportfächer (126) zu übergeben, wobei die Transportfächer (126) der Transportspülmaschine (114) zumindest teilweise in die Beschickungsrampe (128) eingreifen, wobei die Transportfächer (126) zumindest teilweise durch Transportfinger (130) gebildet werden, wobei die Beschickungsrampe (128) Öffnungen zum Eingriff der Transportfinger (130) aufweist, insbesondere Schlitze.

18. Verfahren zur Reinigung von Reinigungsgut (112), umfassend:
i. Bereitstellen mindestens eines Reinigungssystems (110) nach Anspruch 17;
ii. Anliefern von Reinigungsgut (112) mittels des Transportsystems (122), wobei das Reinigungsgut (112) mindestens ein Geschirrteil (112) ist;
iii. Zuführen des Geschirrteils (112) zu dem Wenderad (132) des Handhabungsmoduls (120) mittels der Zuführrampe (138);
iv. Aufnahme des über die Zuführrampe (138) zugeführten Geschirrteils (112) in der Orientierung mit der Benutzungsseite (150) nach oben gerichtet in dem Geschirrteilfach (134) das Wenderads (132);
v. Wenden des Geschirrteils (112) mittels des Wenderads (132);
vi. Aufsetzen des Geschirrteils (112) mittels des Wenderads (132) mit der Benutzungsseite (150) nach unten gerichtet auf die Beschickungsrampe (128), wobei bei dem Aufsetzen auf der Benutzungsseite (150) auf dem Geschirrteil (112) aufgenommene Abfälle aufgrund ihrer Schwerkraft durch die Entsorgungsöffnung (140) der Beschickungsrampe (128) entsorgt werden; und
vii. Überführen des Geschirrteils (112) mittels der Beschickungsrampe (128) von dem Wenderad (132) zu der Transportvorrichtung (118) der Transportspülmaschine (114).

## Claims

1. Handling module (120) for loading a conveying apparatus (118) of a conveyor dishwasher (114), comprising:
A. at least one turning wheel (132) for turning at least one tableware item (112), wherein the turning wheel (132) has at least one tableware-item compartment (134);
B. at least one feeding ramp (138) for feeding the tableware item (112) to the turning wheel (132);
C. at least one charging ramp (128) for transferring the tableware item (112) from the turning wheel (132) to a conveying apparatus (118) of the conveyor dishwasher (114),
wherein the turning wheel (132) is arranged between the feeding ramp (138) and the charging ramp (128), wherein the turning wheel (132) is designed to receive the tableware item (112) fed via the feeding ramp (138) in the tableware-item compartment (134) in an orientation with a use side (150) facing upwards, wherein the turning wheel (132) is also designed to turn the tableware item (112) and to place it onto the charging ramp (128) with the use side (150) facing downwards,
**characterized in that**
the charging ramp (128) has at least one disposal opening (140), wherein waste that is present on the tableware item (112) can be disposed of through the disposal opening (140) on account of its gravitational force when the tableware item is placed on its use side (150).

2. Handling module (120) according to the preceding claim, wherein the turning wheel (132) is designed to cause the tableware item (112) to impact the charging ramp (128) with the use side (150) facing downwards.

3. Handling module (120) according to either one of the preceding claims, wherein the turning wheel (132) has a plurality of radially extending conveying fingers (136), wherein the conveying fingers (136) form the at least one tableware-item compartment (134).

4. Handling module (120) according to the preceding claim, wherein the turning wheel (132) comprises at least two discs (156) from which the conveying fingers (136) extend radially.

5. Handling module (120) according to Claim 1 or 2, wherein the turning wheel (132) has a plurality of carrying-along means (188), wherein the carrying-along means (188) form the at least one tableware-item compartment (134).

6. Handling module (120) according to the preceding claim, wherein each of the carrying-along means (188) has at least one turning geometry (190) and at least one hold-down geometry (192).

7. Handling module (120) according to either one of the two preceding claims, wherein the turning wheel (132) also has a plurality of guide structures (194), wherein the guide structures (194) and the carrying-along means (188) form the at least one tableware-item compartment (134).

8. Handling module (120) according to one of the preceding claims, wherein the handling module (120) also has at least one disposal opening (142), wherein the waste can be disposed of via the disposal opening (142) into at least one disposal apparatus (144) on account of its gravitational force, in particular into at least one disposal apparatus (144) selected from the group consisting of a disposal shaft (146) and a disposal container (148); a comminution device.

9. Handling module (120) according to one of the preceding claims, wherein the charging ramp (128) has an elastic form.

10. Handling module (120) according to one of the preceding claims, wherein the feeding ramp (138) has an elastic form.

11. Handling module (120) according to one of the preceding claims, wherein the turning wheel (132) at least partially engages in at least one element selected from the group consisting of the feeding ramp (138) and the charging ramp (128).

12. Handling module (120) according to one of the preceding claims, wherein the handling module (120) also has at least one tableware-item brake (170) on the feeding ramp (138), wherein the tableware-item brake (170) is designed to temporarily brake the tableware item (112) on the feeding ramp (138), wherein the tableware-item brake (170) comprises at least two stoppers (172), wherein each of the stoppers (172) is in the form of a finger.

13. Handling module (120) according to one of the preceding claims, wherein the handling module (120) also has at least one tableware-item brake (170) on the charging ramp (128), wherein the tableware-item brake (170) is designed to temporarily brake the tableware item (112) on the charging ramp (128).

14. Handling module (120) according to the preceding claim, wherein the handling module (120) comprises at least one coupling, wherein the coupling is designed for synchronizing the at least one movement sequence within the handling module with the conveying apparatus of the conveyor dishwasher, wherein the coupling is selected from the group consisting of a mechanical coupling, in particular a direct mechanical coupling, an electronic coupling, for example an electronic coupling of drive motors using at least one sensor.

15. Handling module (120) according to one of the preceding claims, wherein the handling module (120) also has at least one wiping device (208) for wiping clean the tableware item (112), wherein the wiping device (208) has at least one driven shaft (210), wherein the wiping device (208) also comprises at least one at least partially flexible wiping element (212) secured to the shaft (210), wherein the wiping element (212) is designed to make contact with the tableware item (112).

16. Cleaning system (110) for cleaning washware (112), comprising:
a. at least one handling module (120) according to one of the preceding claims;
b. at least one conveyor dishwasher (114), wherein the conveyor dishwasher (114) comprises at least one cleaning chamber (116) and at least one conveying apparatus (118) for conveying washware (112) from an inlet of the cleaning chamber (116) to an outlet of the cleaning chamber (116) through the cleaning chamber (116), wherein the conveyor dishwasher (114) is designed to apply at least one cleaning fluid to the washware (112) in the cleaning chamber (116); and
c. at least one conveying system (122) for supplying contaminated washware (112),
wherein the handling module (120) is designed to transfer tableware items (112) supplied by the conveying system (122) to the conveying apparatus (118) of the conveyor dishwasher (114).

17. Cleaning system (110) according to the preceding claim, wherein the conveying apparatus (118) of the conveyor dishwasher (114) has a plurality of conveying compartments (126), wherein the charging ramp (128) of a handling module (120) is designed to transfer the tableware item (112) into at least one of the conveying compartments (126), wherein the conveying compartments (126) of the conveyor dishwasher (114) at least partially engage in the charging ramp (128), wherein the conveying compartments (126), at least partially, are formed by conveying fingers (130), wherein the charging ramp (128) has openings, in particular slots, for the engagement of the conveying fingers (130).

18. Method for cleaning washware (112), comprising:
i. providing at least one cleaning system (110) according to Claim 17;
ii. supplying washware (112) by means of the conveying system (122), wherein the washware (112) is at least one tableware item (112);
iii. feeding the tableware item (112) to the turning wheel (132) of the handling module (120) by means of the feeding ramp (138);
iv. receiving the tableware item (112) fed via the feeding ramp (138) in the tableware-item compartment (134) of the turning wheel (132) in the orientation with the use side (150) facing upwards;
v. turning the tableware item (112) by means of the turning wheel (132);
vi. placing the tableware item (112) onto the charging ramp (128) with the use side (150) facing downwards by means of the turning wheel (132), wherein waste that is present on the tableware item (112) is disposed of through the disposal opening (140) of the charging ramp (128) on account of its gravitational force when the tableware item is placed on its use side (150); and
vii. transferring the tableware item (112) from the turning wheel (132) to the conveying apparatus (118) of the conveyor dishwasher (114) by means of the charging ramp (128).

## Revendications

1. Module de manipulation (120) pour le chargement d'un dispositif de transport (118) d'un lave-vaisselle à transport (114), comprenant :
A. au moins une roue de retournement (132) pour retourner au moins une pièce de vaisselle (112), la roue de retournement (132) présentant au moins un compartiment de pièce de vaisselle (134) ;
B. au moins une rampe d'amenée (138) pour amener la pièce de vaisselle (112) à la roue de retournement (132) ;
C. au moins une rampe de chargement (128) pour transférer la pièce de vaisselle (112) de la roue de retournement (132) à un dispositif de transport (118) du lave-vaisselle à transport (114),
la roue de retournement (132) étant agencée entre la rampe d'amenée (138) et la rampe de chargement (128), la roue de retournement (132) étant adaptée pour recevoir la pièce de vaisselle (112) amenée par la rampe d'amenée (138) dans une orientation avec un côté d'utilisation (150) dirigé vers le haut dans le compartiment de pièce de vaisselle (134), la roue de retournement (132) étant en outre adaptée pour retourner la pièce de vaisselle (112) et la mettre en place sur la rampe de chargement (128) avec le côté d'utilisation (150) dirigé vers le bas,
**caractérisé en ce que**
la rampe de chargement (128) présente au moins une ouverture d'évacuation (140), les déchets reçus sur la pièce de vaisselle (112) pouvant être évacués à travers l'ouverture d'évacuation (140) en raison de leur force de gravité lors de la mise en place sur le côté d'utilisation (150).

2. Module de manipulation (120) selon la revendication précédente, la roue de retournement (132) étant adaptée pour frapper la pièce de vaisselle (112) sur la rampe d'amenée (128) avec le côté d'utilisation (150) vers le bas.

3. Module de manipulation (120) selon l'une quelconque des revendications précédentes, la roue de retournement (132) comprenant une pluralité de doigts de transport (136) s'étendant radialement, les doigts de transport (136) formant l'au moins un compartiment de pièce de vaisselle (134).

4. Module de manipulation (120) selon la revendication précédente, la roue de retournement (132) comprenant au moins deux disques (156) à partir desquels les doigts de transport (136) s'étendent radialement.

5. Module de manipulation (120) selon la revendication 1 ou 2, la roue de retournement (132) présentant une pluralité d'entraîneurs (188), les entraîneurs (188) formant l'au moins un compartiment de pièce de vaisselle (134).

6. Module de manipulation (120) selon la revendication précédente, les entraîneurs (188) présentant chacun au moins une géométrie de retournement (190) et au moins une géométrie de serre-flan (192).

7. Module de manipulation (120) selon l'une quelconque des deux revendications précédentes, la roue de retournement (132) présentant en outre une pluralité de structures de guidage (194), les structures de guidage (194) et les entraîneurs (188) formant l'au moins un compartiment de pièce de vaisselle (134).

8. Module de manipulation (120) selon l'une quelconque des revendications précédentes, le module de manipulation (120) présentant en outre au moins une ouverture d'évacuation (142), les déchets pouvant être évacués en raison de leur force de gravité par l'intermédiaire de l'ouverture d'évacuation (142) dans au moins un dispositif d'évacuation (144), notamment dans au moins un dispositif d'évacuation (144) choisi dans le groupe constitué par un puits d'évacuation (146) et un conteneur d'évacuation (148) ; un dispositif de broyage.

9. Module de manipulation (120) selon l'une quelconque des revendications précédentes, la rampe de chargement (128) étant de conception élastique.

10. Module de manipulation (120) selon l'une quelconque des revendications précédentes, la rampe d'amenée (138) étant de conception élastique.

11. Module de manipulation (120) selon l'une quelconque des revendications précédentes, la roue de retournement (132) étant au moins partiellement engagée dans au moins un élément choisi dans le groupe constitué par la rampe d'amenée (138) et la rampe de chargement (128).

12. Module de manipulation (120) selon l'une quelconque des revendications précédentes, le module de manipulation (120) présentant en outre au moins un frein de pièce de vaisselle (170) sur la rampe d'amenée (138), le frein de pièce de vaisselle (170) étant adapté pour freiner temporairement la pièce de vaisselle (112) sur la rampe d'amenée (138), le frein de pièce de vaisselle (170) comprenant au moins deux butées (172), les butées (172) étant chacune conçues sous forme de doigts.

13. Module de manipulation (120) selon l'une quelconque des revendications précédentes, le module de manipulation (120) présentant en outre au moins un frein de pièce de vaisselle (170) sur la rampe de chargement (128), le frein de pièce de vaisselle (170) étant adapté pour freiner temporairement la pièce de vaisselle (112) sur la rampe de chargement (128).

14. Module de manipulation (120) selon la revendication précédente, le module de manipulation (120) comprenant au moins un couplage, le couplage étant adapté pour la synchronisation de l'au moins une séquence de mouvements à l'intérieur du module de manipulation avec le dispositif de transport du lave-vaisselle à transport, le couplage étant choisi dans le groupe constitué par un couplage mécanique, notamment un couplage mécanique direct, un couplage électronique, par exemple un couplage électronique de moteurs d'entraînement en utilisant au moins un capteur.

15. Module de manipulation (120) selon l'une quelconque des revendications précédentes, le module de manipulation (120) présentant en outre au moins un appareil d'essuyage (208) pour essuyer la pièce de vaisselle (112), l'appareil d'essuyage (208) présentant au moins un arbre entraîné (210), l'appareil d'essuyage (208) comprenant en outre au moins un élément d'essuyage (212) conçu au moins partiellement de manière flexible et fixé à l'arbre (210), l'élément d'essuyage (212) étant adapté pour entrer en contact avec la pièce de vaisselle (112).

16. Système de nettoyage (110) pour le nettoyage d'objets à nettoyer (112), comprenant :
a. au moins un module de manipulation (120) selon l'une quelconque des revendications précédentes ;
b. au moins un lave-vaisselle à transport (114), le lave-vaisselle à transport (114) présentant au moins une chambre de nettoyage (116) et au moins un dispositif de transport (118) pour le transport d'objets à nettoyer (112) depuis une entrée de la chambre de nettoyage (116) à travers la chambre de nettoyage (116) jusqu'à une sortie de la chambre de nettoyage (116), le lave-vaisselle à transport (114) étant adapté pour solliciter les objets à nettoyer (112) dans la chambre de nettoyage (116) avec au moins un fluide de nettoyage ; et
c. au moins un système de transport (122) pour la livraison d'objets à nettoyer sales (112),
le module de manipulation (120) étant adapté pour transférer des pièces de vaisselle (112) livrées par le système de transport (122) au dispositif de transport (118) du lave-vaisselle à transport (114).

17. Système de nettoyage (110) selon la revendication précédente, le dispositif de transport (118) du lave-vaisselle à transport (114) présentant une pluralité de compartiments de transport (126), la rampe de chargement (128) d'un module de manipulation (120) étant adaptée pour transférer la pièce de vaisselle (112) dans au moins un des compartiments de transport (126), les compartiments de transport (126) du lave-vaisselle à transport (114) s'engageant au moins partiellement dans la rampe de chargement (128), les compartiments de transport (126) étant formés au moins partiellement par des doigts de transport (130), la rampe de chargement (128) présentant des ouvertures pour l'engagement des doigts de transport (130), notamment des fentes.

18. Procédé de nettoyage d'objets à nettoyer (112), comprenant :
i. la fourniture d'au moins un système de nettoyage (110) selon la revendication 17 ;
ii. la livraison d'objets à nettoyer (112) au moyen du système de transport (122), les objets à nettoyer (112) étant au moins une pièce de vaisselle (112) ;
iii. l'amenée de la pièce de vaisselle (112) à la roue de retournement (132) du module de manipulation (120) au moyen de la rampe d'amenée (138) ;
iv. la réception de la pièce de vaisselle (112) amenée par la rampe d'amenée (138) dans l'orientation avec le côté d'utilisation (150) dirigé vers le haut dans le compartiment de pièce de vaisselle (134) de la roue de retournement (132) ;
v. le retournement de la pièce de vaisselle (112) au moyen de la roue de retournement (132) ;
vi. la mise en place de la pièce de vaisselle (112) sur la rampe de chargement (128) au moyen de la roue de retournement (132), le côté d'utilisation (150) étant dirigé vers le bas, les déchets reçus sur la pièce de vaisselle (112) étant évacués en raison de leur force de gravité à travers l'ouverture d'évacuation (140) de la rampe de chargement (128) lors de la mise en place sur le côté d'utilisation (150) ; et
vii. le transfert de la pièce de vaisselle (112) au moyen de la rampe de chargement (128) depuis la roue de retournement (132) vers le dispositif de transport (118) du lave-vaisselle à transport (114).
